Europäisches Patentamt

European Patent Office

Office européen des brevets

(11) Publication number: **0 081 387**
**B1**

# EUROPEAN PATENT SPECIFICATION

(45) Date of publication of patent specification: 26.02.86

(51) Int. Cl.⁴: **G 11 B 5/09, H 03 M 13/00**

(21) Application number: **82306543.8**

(22) Date of filing: **08.12.82**

(54) Apparatus for selectively compensating burst errors of variable length in successive data words.

(30) Priority: **08.12.81 JP 197437/81**

(43) Date of publication of application:
**15.06.83 Bulletin 83/24**

(45) Publication of the grant of the patent:
**26.02.86 Bulletin 86/09**

(84) Designated Contracting States:
**AT DE FR GB NL**

(56) References cited:
**EP-A-0 037 212**
**EP-A-0 044 963**
**GB-A-2 055 009**
**GB-A-2 071 370**
**GB-A-2 090 106**
**US-A-4 003 020**
**US-A-4 188 616**
**US-A-4 206 440**
**US-A-4 224 642**
**US-A-4 277 807**

**IEEE TRANSACTIONS ON MAGNETICS, vol.
MAG-11, no. 5, September 1975, pages 1230-
1233, New York (USA); A.H. JONES :"Digital
sound and television recording - the
requirements of the signal"**

(73) Proprietor: **SONY CORPORATION**
**7-35 Kitashinagawa 6-Chome Shinagawa-ku
Tokyo 141 (JP)**

(72) Inventor: **Nakano, Kenji c/o Sony Corporation
7-35 Kitashinagawa-6 Shinagawa-ku
Tokyo (JP)**
Inventor: **Moriwaki, Hisayoshi c/o Sony
Corporation
7-35 Kitashinagawa-6 Shinagawa-ku
Tokyo (JP)**

(74) Representative: **Thomas, Christopher Hugo
et al
D Young & Co 10 Staple Inn
London WC1V 7RD (GB)**

## Description

This invention relates to apparatus for selectively compensating burst errors of variable length in successive data words.

Digital encoding techniques have been applied to various fields of information transmission and recording. For example, audio and video data originating as analog signals are converted to digital representations which are coded in a manner to minimize errors that would affect the recovery of the original information. One of such encoding techniques is the time-interleaved code, wherein a "block" of successive data words might be interleaved with data words from one or several other blocks, the resultant interleaved data words then being transmitted or recorded. With this code, even if one or more adjacent data words in the interleaved block are corrupted during transmission, recording receiving or playback operations, when the data words are de-interleaved to recover the original data blocks, only a few (typically, one) of the data words in each data block will be distorted. If such data words are further encoded in a conventional error-correcting code, the distorted data word may be corrected in accordance with the known capabilities of such error correcting codes.

When audio or video information is represented by digital signals, the fact that such information is generally relatively slowly varying means that an erroneous data word can be closely approximated by interpolation. For example, let it be assumed that, of three successive words, the first word is correct, the second is erroneous and the third is correct. In accordance with the aforementioned time-interleaved encoding technique, it is not unusual for burst errors which are present in the time-interleaved data block to result, after de-interleaving, in only one out of three de-interleaved data words being erroneous. Here, the erroneous data word may be approximated by taking the average of the first and third (the preceding and following) data words.

A still closer approximation of the erroneous data word may be made by the so-called cubic interpolating technique. Cubic interpolation is utilized if the erroneous data word is preceded by two successive correct data words and is followed by two successive correct data words. Here too, this pattern of one out of five data words being erroneous is not unusual when burst errors affect the interleaved data words which constitute a time-interleaved block.

Yet another technique which is utilized to correct an erroneous data word is the so-called previous-value hold technique wherein an erroneous data word is replaced by the immediately preceding, correct data word.

Of the foregoing interpolation techniques, cubic interpolation generally provides the closest approximation to a correct data word, that is, the original data word which has been corrupted, and the previous-value hold technique provides the least good approximation of these three. But, a substantially greater amount of circuitry and circuit operating capacity are needed in order to improve the degree of approximation for compensating the erroneous data word. Hence, the degree of accuracy with which errors are compensated must be weighed against the complexity and cost of the error correction apparatus.

It is desirable to provide error compensating circuitry which can adapt to the number of errors which are present. For example, with smaller burst errors which may affect only every other data word, compensation based on relatively simple averaging may be satisfactory. For a relatively larger burst error wherein several successive data words are corrupted, it may be necessary to replace one or more of such erroneous data words by using the previous-value hold technique. Likewise, if the burst error is of intermediate size, resulting in errors in a relatively small number of successive data words, it is advantageous to provide yet another data compensating or interpolating, technique to correct those erroneous words. Depending upon the particular error condition which is present, an appropriate one of the aforementioned compensating techniques should be used.

Patent specification US—A—4 206 440 discloses apparatus for selectively compensating burst errors of variable length in successive data words using an averaging technique and a hold technique in accordance with the pre-characterising part of claim 1. This specification further discloses sensing means for sensing the presence of successive erroneous data words preceded by a correct data word. Moreover, patent specification EP—A—44 963 (to be considered under Article 54(3)) discloses compensation by interpolating if one to four successive words are erroneous and by holding correct words if more than four words are erroneous.

According to the present invention there is provided apparatus for selectively compensating burst errors of variable length in successive data words, the apparatus comprising:

an input for receiving said successive data words;

identifying means for identifying which data words are erroneous and correct, respectively;

interpolating means for producing an interpolated data word by averaging two data words supplied thereto;

sensing means for sensing the following condition:

(a) the presence of an erroneous data word preceded and followed by respective correct data words,

supply means reponsive to the sensing of said condition (a) for supplying to said interpolating means the respective preceding and following correct data words;

interpolation control means coupled to said interpolating means and to said sensing means and responsive to said condition (a) for controlling said interpolating means to operate once; and

replacement means coupled to said interpolating means and to said sensing means and responsive to said condition (a) for replacing the erroneous data word with the interpolated data word and for replacing a data word of a plurality of successive erroneous data words by a preceding data word; characterised in that:

said sensing means further senses the following conditions:

(b) the presence of a first plurality of successive erroneous data words preceded and followed by respective correct data words, and

(c) the presence of a second plurality of successive erroneous data words preceded by a correct data word;

said second plurality of successive erroneous data words of said condition (c) exceeding said first plurality of successive erroneous data words of said condition (b);

said supply means is further responsive to the sensing of said condition (b) for supplying to said interpolating means the respective preceding and following correct data words;

said interpolation control means is further responsive to said condition (b) for controlling said interpolating means to operate a plurality of times to produce a plurality of interpolated data words, said interpolation control means including means responsive to said condition (b) temporarily to store a pseudo interpolated data word produced by said interpolating means in response to the averaging of said preceding and following data words, and means for supplying the temporarily stored pseudo interpolated data word and one of said preceding and following data words to said interpolating means for averaging therein to produce a first interpolated data word; and said replacement means further being responsive to said condition (b) for replacing a first erroneous data word with said interpolated data word, and said replacement means further being responsive to said condition (c) for replacing at least the first of said second plurality of successive erroneous data words with the preceding correct data word.

The invention will now be described by way of example with reference to the accompanying drawings, in which:

Figures 1A to 1C are schematic representations of a data block and the manner in which an interleaved data block is formed therefrom;

Figures 2A and 2B are schematic representations of the affect of burst errors on de-interleaved data words;

Figure 3 is a block diagram of a recording system in which an embodiment of the invention can be used;

Figures 4A and 4B are block diagrams of one embodiment of error correcting apparatus in accordance with the invention;

Figure 5 is a table which represents error correcting techniques which are used for respective different error conditions;

Figures 6A to 6I are timing diagrams used in explaining the operation of the embodiments of Figure 4A;

Figure 7 is a block diagram of another embodiment of error correcting apparatus in accordance with the invention;

Figure 8 is a table similar to that shown in Figure 5 and for the embodiment of Figure 7; and

Figures 9A to 9E are timing diagrams used in explaining the operation of the embodiment of Figure 7.

The error correcting technique described herein is particularly useful in conjunction with an error-correction code, such as a time-interleaved code; although the use of this code is not necessary to carry out the invention. In one form of time-interleaving, data blocks formed of a plurality of data words are time-interleaved to form an interleaved block. The word configuration of such an interleaved block comprises, for example, the first word of the first data block, followed by the first word of the second data block, followed by the first word of the third data block, and so on. After the first word of the last data block, the next word consists of the second word of the first data block followed by the second word of the second data block, and so on. In this interleaved block, adjacent words from the same block are separated from each other by a number of data words, this number being equal to the number of data blocks which are interleaved.

An advantage of such an interleaved coding technique is that it reduces the size of the error which might appear in a particular data block. For example, in an interleaved block, let it be assumed that adjacent words are separated from each other by ten words which are desired from ten separate data blocks. If the interleaved data block is transmitted or recorded serially by word, then an error which affects, for example, up to ten successive words in the interleaved block will, after de-interleaving, affect only one data word in each data block. Depending upon additional error correcting codes which also may be used, such as parity codes, an erroneous data word in a data block can be corrected or compensated as a function of the correct words in that block. Even if complicated additional error correcting codes are not used, a single erroneous data word can be approximated by averaging the data words which precede and follow that erroneous word. Still further, and as described herein, if the burst error which affects the interleaved block is sufficiently long as to affect, for example, twenty interleaved words in that block, only two successive data words in a de-interleaved original data block will be affected. If these two erroneous words are preceded and followed, respectively, by correct data words, the erroneous words may be approximated by a technique described herein as the "thrice averaging" technique.

The foregoing averaging techniques result in good approximations of original data words especially if such data words are representative of audio or video information, or other information which varies relatively slowly with time.

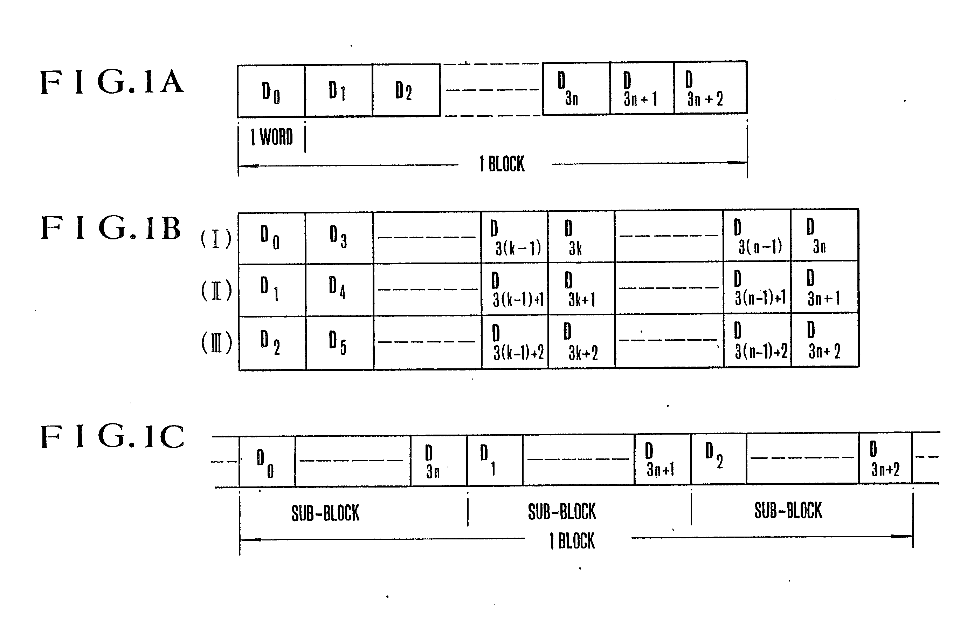

Referring now to Figure 1A, there is schematically illustrated a representation of an original data block formed of successive data words $D_0$, $D_1$,...$D_{3n}$, $D_{3n+1}$ and $D_{3n+2}$. This single data block may be re-formatted as an interleaved data block in and of itself, without interleaving thereinto the data words of other data blocks. As shown in Figure 1B, the data block may be reconfigured as sub-blocks I, II and III, respectively. Each of these sub-blocks comprises every third data word in the original data block. Thus, the sub-block I is formed of every third data word $D_0$, $D_3$,...$D_{3(k-1)}$, $D_{3k}$,...$D_{3(n-1)}$ and $D_{3n}$. The sub-block II is formed of data words $D_1$, $D_4$,...$D_{3(k-1)+1}$, $D_{3k+1}$,...$D_{3(n-1)+1}$ and $D_{3n+1}$. Finally, the sub-block III is formed of data words $D_2$, $D_5$,...$D_{3(k-1)+2}$, $D_{3k+2}$,...$D_{3(n-1)+2}$ and $D_{3n+2}$. It is appreciated that these sub-blocks may be formed by writing the data words included in the data block shown in Figure 1A into suitable addressable locations of a random access memory (RAM).

The time-interleaved block shown in Figure 1C may be produced by reading out from the RAM all of the data words included in the sub-block I followed by all of the data words included in the sub-block II followed by all of the data words included in the sub-block III. It is recognized that adjacent words of the original data block are separated from each other by n data words, these n data words being equal to the effective length of a sub-block. Adjacent words included in the interleaved block shown in Figure 1C are seen to be every third word of the original data block. That is, in the sub-block I included in the interleaved block of Figure 1C, the data words $D_0$ and $D_3$ are adjacent to each other, as are the data words $D_3$ and $D_6$. Likewise, in the sub-block II, the data words $D_1$ and $D_4$ are adjacent to each other, as are the data words $D_4$ and $D_7$. Finally, in the sub-block III of the interleaved block shown in Figure 1C, the data words $D_2$ and $D_5$ are adjacent to each other, as are the data words $D_5$ and $D_8$.

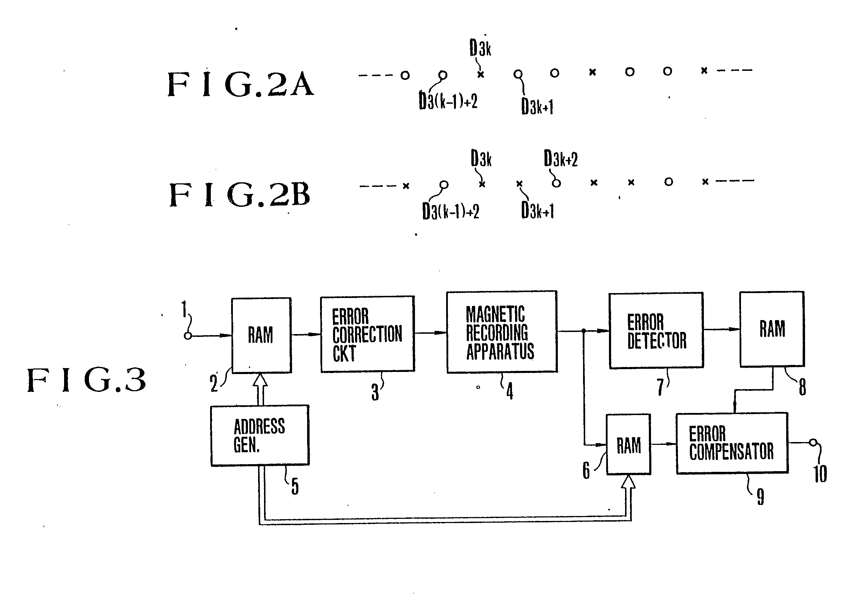

The interleaved block shown in Figure 1C is intended to be transmitted or recorded. It is appreciated that errors, referred to as burst errors, may corrupt one or more, or even several, of the interleaved data words included in the interleaved block. In fact, the burst errors may be sufficiently long to corrupt or destroy all of the data words included in one or even two sub-blocks. If the burst error is of sufficient length (or duration) so as to corrupt the sub-block I, for example, then upon recovering and de-interleaving the interleaved block, the original data block shown in Figure 1A will be re-formed, but every data word that had been included in the sub-block I will be erroneous. Figure 2A is a schematic representation of the re-formed data block wherein each erroneous data word (recovered from the sub-block I) is represented by an "x", and each correct data word (recovered from the sub-blocks II and III) is represented by an "o". It is seen that, when the burst error is of sufficient length to destroy only one sub-block, the de-interleaved data words will appear as an erroneous data word following every two correct data words, shown clearly in Figure 2A.

Erroneous data words due to a burst error whose length does not extend one-third of the length of an interleaved block (that is, erroneous data words of the type shown in Figure 2A) may be corrected, or compensated, by the so-called "once averaging" technique. The digital data words described herein are used to represent audio or video information, or other information which varies relatively slowly with time. Hence, the information represented by the erroneous data word $D_{3k}$ (wherein k=0, 1, 2,...) may be closely approximated by interpolation. That is, a compensated value of data word $D_{3k}$ may be closely approximated by averaging the correct data words which precede ($D_{3(k-1)+2}$) and follow ($D_{3k+1}$) the erroneous data word $D_{3k}$. The compensated, or interpolated, data word $\overline{D_{3k}}$ may be mathematically expressed as follows:

$$\overline{D_{3k}} = \frac{(D_{3(k-1)+2}) + (D_{3k+1})}{2}$$

If the burst error is of sufficient duration to corrupt or destroy two-thirds of the interleaved data block, for example, if the burst error destroys the data words included in the sub-blocks I and II, the original data block, when re-formed, will appear as shown schematically in Figure 2B. As a result of this burst error, two successive data words ($D_{3k}$ and $D_{3k+1}$) are erroneous, but the preceding data word ($D_{3(k-1)+2}$) and the following data word ($D_{3k+2}$) both are correct. Here, the two successive erroneous data words may be compensated by approximating their values by means of the so-called "thrice averaging" technique. In accordance with this technique, the correct preceding and following data words included in the recovered data block are averaged to produce what is referred to herein as a "pseudo interpolated" word. In one arrangement, this pseudo interpolated word is then averaged with the following data word ($D_{3k+2}$) to derive a compensated data word which closely approximates to the original value of the data word $D_{3k+1}$. Then, this compensated data word $D_{3k+1}$ is averaged with the correct preceding data word ($D_{3(k-1)+2}$) to derive another compensated data word which closely approximates to the original value of the data word $D_{3k}$. In an alternative arrangement, the pseudo interpolated word is averaged with the preceding correct data word ($D_{3(k-1)+2}$) to derive a compensated data word which closely approximates to the original value of the data word $D_{3k}$. Then, this compensated data word $D_{3k}$ is averaged with the correct following data word $D_{3k+2}$ to derive another compensated data word which closely approximates to the original value of the data word $D_{3k+1}$.

In the thrice averaging technique, three averaging operations are carried out, using the correct preceding and following data words, to compensate for the two successive erroneous data words. This thrice averaging technique may be mathematically expressed in accordance with the following equations, wherein X represents the pseudo interpolated word, $D_{3k}$ represents the compensated data word $D_{3k}$, and $D_{3k+1}$ represents the compensated data word $D_{3k+1}$:

$$X = \frac{(D_{3(k-1)+2}) + (D_{3k+2})}{2}$$

$$\overline{D_{3k+1}} = \frac{X + (D_{3k+2})}{2}$$

$$\overline{D_{3k}} = \frac{\overline{D_{3k+1}} + (D_{3(k-1)+2})}{2}$$

The alternative arrangement mentioned above for carrying out the thrice averaging technique may be mathematically expressed as follows:

$$X = \frac{(D_{3(k-1)+2}) + (D_{3k+2})}{2}$$

$$\overline{D_{3k}} = \frac{(D_{3(k-1)+2}) + X}{2}$$

$$\overline{D_{3k+1}} = \frac{\overline{D_{3k}} + (D_{3k+2})}{2}$$

It is appreciated that the once averaging technique and the thrice averaging technique provide more accurate approximations in compensating for the erroneous data words wherein the burst error is of a duration up to one-third and up to two-thirds, respectively, of the length of an interleaved block. It is, accordingly, desirable to utilize such once averaging and thrice averaging compensation techniques, wherever possible, rather than the aforementioned "previous value hold" technique. However, for burst errors of durations greater than two-thirds of the length of an interleaved block, the previous value hold compensation technique should be used. This is because the number of successive erroneous data words which are re-formed from the interleaved block is too large for once averaging or thrice averaging compensation. It will be recognised, however, that, once previous value hold compensation is carried out, it is highly likely that the next-following compensation technique will be the thrice averaging technique. This can be explained as follows: let it be assumed that the interleaved block is formed by interleaving three sub-blocks. Upon de-interleaving, let it be assumed that, merely as an example, the data word $D_5$ is correct but the data words $D_6$, $D_7$ and $D_8$ all are erroneous. Let it be further assumed that the next-following data word $D_9$ also is correct. Since three successive data words ($D_6$, $D_7$, $D_8$) are erroneous, neither the once averaging nor the thrice averaging compensation technique must be used, and the data word $D_6$ is compensated by re-using the data word $D_5$ therefor. It is assumed, with this compensation, that the data word $D_6$ now is correct. Therefore, since the data words $D_6$ and $D_9$ are correct but the intermediate data words $D_7$ and $D_8$ remain erroneous, these intermediate words $D_7$ and $D_8$ may be corrected by the aforementioned thrice averaging technique utilizing the preceding and following data words $D_6$ and $D_9$ in the manner discussed above.

One system in which an embodiment of the invention finds application is illustrated in Figure 3. Merely for purposes of explanation, the system illustrated in Figure 3 is a recording system wherein input information, such as audio information, is recorded in digital form. It is assumed that the input information already comprises digital data words; and as an example, the illustrated recording system may comprise a so-called audio PCM recorder. This recorder is arranged to record and subsequently play back digital signals (for example, audio PCM, digitized video signals, or the like) on a magnetic tape. The system comprises an input terminal 1 to which successive digital words, such as the digital words shown in Figure 1A, are supplied, these digital words representing audio or video information; a random access memory (RAM) 2, an error correction code generator 3, magnetic recording apparatus 4, a RAM 6, and an error compensating circuit 9. The RAM 2 is coupled to the input terminal 1 and is arranged to store therein at least one data block of the type shown schematically in Figure 1A. The RAM 2 is coupled to an address generator 5 to receive write-in addresses which determine the particular locations in the RAM 2 at which the successive data words are written. Preferably, these data words are written at locations whereby the sub-blocks shown in Figure 1B are formed. The purpose of the RAM 2 is to interleave the data words supplied thereto from the input terminal 1 so as to create the interleaved block shown in Figure 1C from the supplied data block shown in Figure 1A. It is appreciated that this interleaved block may be formed by controlling the write-in and read-out addresses supplied by the address generator 5 to the RAM 2.

The output of the RAM 2 is coupled to the recording apparatus 4 via the error correction code generator 3. The error correction code generator 3 may be of the type arranged to generate the cyclic redundancy check (CRC) code, whereby each interleaved block, or each sub-block included in each interleaved block, is provided with an error correction code (for example, a CRC code word) appended thereto. The interleaved block, including the error correction code words included therein, are recorded on a magnetic medium, such as magnetic tape, by the recording apparatus 4. In one example, the recording apparatus may be of a type normally used in video tape recorders (VTRs) by which one or more rotary magnetic heads are used to record information in successive parallel, skewed tracks. When used to record-video signals, each track has a video field interval recorded therein; and when used to record audio PCM signals, each track may have an interleaved block recorded therein. Hence, each interleaved block is processed as if it were a video field interval.

The reproducing section of the recording apparatus 4 is coupled to the RAM 6, the RAM 6 being the complement of the RAM 2 and functioning to de-interleave the data words that had been recorded as the interleaved block shown in Figure 1C. The RAM 6 is coupled to the address generator 5 and receives write-in addresses therefrom so as to write the interleaved data words which are reproduced from the magnetic medium into appropriate storage locations of the RAM 6. The output of the RAM 6 is coupled to the error compensating circuit 9, described in greater detail below. It will be appreciated that the RAM 6 is controlled, during a readout operation, in response to read addresses supplied thereto by the address generator 5. These read addresses serve to de-interleave the data words which had been written into the RAM 6.

The apparatus shown in Figure 3 also includes an error detector 7 and a RAM 8. It will be recognised that, by reason of the error correction code which accompanies the interleaved data blocks recorded by the recording apparatus 4, the presence of an error in a sub-block (that is, one or more of the sub-blocks shown in Figure 1C) may be detected by conventional error detecting circuitry. For example, if an error correction code accompanies a sub-block, the error detector 7 is arranged to sense whether an error is present in that sub-block. If so, then every data word included in that sub-block is interpreted as being erroneous. This is achieved by accompanying each data word with an error flag, this flag being set to a binary "1" in the event that the data word is viewed as being erroneous; and the error flag being reset to a binary "0" when the data word is viewed as being correct. Hence, the error detector 7 functions to set or reset the error flags associated with each data word that is reproduced by the recording apparatus 4. Consequently, the presence of an error condition in the reproduced data word may be sensed.

The error detector 7 is coupled to the RAM 8 which functions as an error flag memory. The purpose of this error flag memory is to store the error flags which are associated with the de-interleaved data words produced by the RAM 6. Thus, the RAMs 6 and 8 may both be responsive to the write and read addresses generated by the address generator 5 so as to de-interleave the interleaved data words reproduced from a magnetic medium and, concurrently, de-interleave the error flags associated with those words. Thus, the RAM 8 indicates which of the data words included in a re-formed data block are erroneous. Stated otherwise, the RAM 8 functions to indicate which of the data words illustrated in Figures 2A and 2B should be represented as "x" and which should be represented as "o". The error flags stored in the RAM 8 are coupled to the error compensating circuit 9 for the purpose of compensating for erroneous data words, as will be described. The output of the error compensating circuit 9 is coupled to an output terminal 10, whereby corrected data words are provided.

In operation, successive data words are supplied to the RAM 2 via the input terminal 1. These successive data words appear as shown schematically in Figure 1A. Under the control of write addresses supplied thereto by the address generator 5, the RAM 2 stores these data words in, for example, sub-block configurations of the type shown in Figure 1B. After a complete data block is stored, the address generator 5 supplies read addresses to the RAM 2 to read out the sub-blocks I, II and III, in succession, as shown in Figure 1C. Thus, the data words included in the data block shown in Figure 1A are time-interleaved so as to form the interleaved block shown in Figure 1C. This interleaved block is supplied to the recording apparatus 4 via the error correction code generator 3, thereby adding, for example, a CRC code word to each of the sub-blocks shown in Figure 1C. The interleaved block, including the error correction code words added thereto, is recorded on the magnetic medium.

Subsequently, the interleaved block, including the added error correction code words is reproduced from the magnetic medium. The reproduced interleaved block is supplied to the RAM 6 and also to the error detector 7. Under the control of write addresses supplied thereto by the address generator 5, the RAM 6 writes the interleaved data words into respective storage locations analogous to that shown in Figure 1B. Concurrently, each sub-block included in the reproduced interleaved block is detected by the error detector 7 to ascertain the presence of errors in the sub-blocks. This error detection operation is carried out by a so-called CRC check circuit of a type known. Upon detecting an error in a sub-block, the error flags which accompany all of the data words included in that sub-block are set to a binary "1", thus indicating the presence of an error condition. Hence, each data word included in that sub-block is interpreted as being erroneous. If an error condition is not detected for a sub-block, the error flags associated with the data words included in that sub-block remain reset to a binary "0".

The error flags, which are set or reset by the error detector 7 in the manner described above, are written into storage locations of the RAM 8 in response to the same write addresses that are supplied to the RAM 6. Thus, as each interleaved data word is written into a storage location in the RAM 6, its associated error flag is written into a corresponding storage location in the RAM 8. After the interleaved block has been written into the RAM 6, and the associated error flags which accompany the data words included in that interleaved block are written into the RAM 8, the address generator 5 supplies read addresses to the RAM 6 (and also to the RAM 8) to read out the data words to re-form the same sequence of the original data block shown in Figure 1A. Hence, the data words which had been written into the RAM 6 are de-interleaved and read out therefrom. At the same time, the error flags which accompany such data words are read out of the RAM 8. Thus, the original sequence of data words is recovered from the RAM 6 and supplied to the error compensator 9.

The error compensator is described in greater detail hereinbelow. Suffice it to say that the error flags which accompany the de-interleaved data words are used to sense various error conditions that may be present. For example, one of the following error conditions may be sensed:

(a) An erroneous data word preceded and followed, respectively, by correct data words, such as represented schematically in Figure 2A. It is recognised that this error condition is sensed as a function of the error flags which accompany these data words.

(b) Another error condition that may be sensed is the presence of a plurality of successive erroneous data words preceded and followed, respectively, by correct data words, such as represented schematically in Figure 2B.

(c) Yet another error condition which may be sensed is the presence of a predetermined number of successive erroneous data words preceded by a correct data word, such as described hereinabove in conjunction with the previous-hold compensation technique.

Of course, a no-error condition may be sensed whereby all of the successively read out data words are detected as being correct. Depending upon the sensed error condition (a), (b) or (c), a respective one of three different types of error compensation techniques is utilized to correct the sensed error condition. For example, if the error condition (a) is sensed, the error compensator 9 is controlled to carry out the once averaging technique. If the error condition (b) is sensed, the error compensator 9 is controlled to carry out the thrice averaging technique. Finally, if the error condition (c) is sensed, the error compensator 9 is controlled to carry out the previous value hold technique.

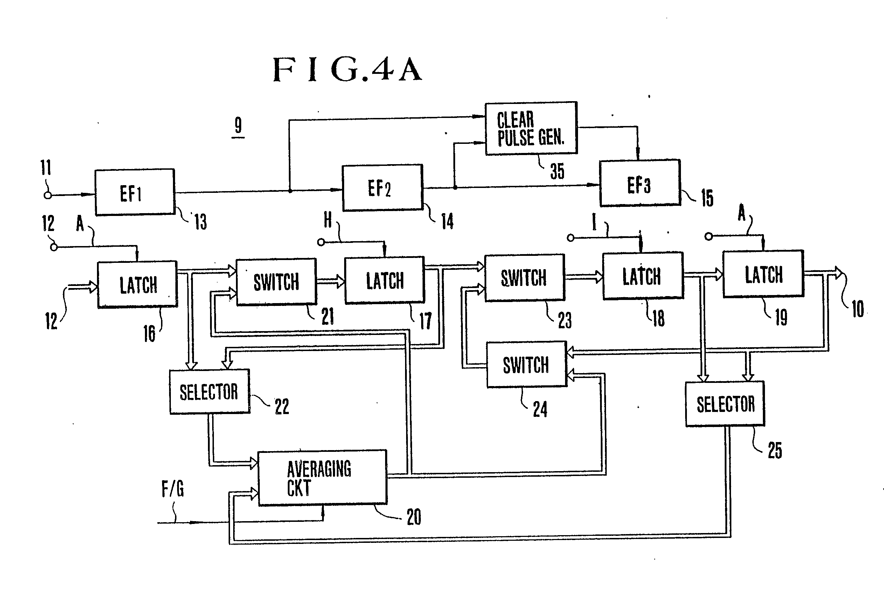

One embodiment of the error compensator 9 is illustrated in Figure 4A. The error compensator comprises a data word register, an error flag register, an averaging circuit, selector circuits and switch circuits. The data word register comprises latch circuits 16, 17, 18 and 19, each arranged to store a respective data word therein. Each latch circuit 16 to 19 may be of the type wherein a data word supplied thereto is stored, or "latched, in response to a latch, or shift, clock pulse supplied thereto. For a purpose soon to be described, the latch circuit 16 is supplied with a latch clock A, the latch circuit 17 is supplied with a latch clock H, the latch circuit 18 is supplied with a latch clock 1 and the latch circuit 19 is supplied with a latch clock A. The latch circuits 16 to 19 may be viewed as a shift register for storing four successive data words, the first stage, referred to herein as the latch circuit 16, being coupled to an input terminal 12 to receive the successive, de-interleaved data words read out from the RAM 6 (Figure 3).

The error flag register is arranged to store the error flags which accompany the data words stored in the data register. In particular, the error flag register comprises latch circuits 13, 14 and 15 which store the error flags that accompany the data words stored in the latch circuits 16, 17 and 18, respectively. Here too, the latch circuits 13, 14 and 15 comprise a shift register, and each stage of this shift register is formed by a respective latch circuit supplied with the latch clock A. The first stage of the error flag register is coupled to an input terminal 11 to receive the de-interleaved error flags that are read out of the RAM 8 concurrently with the reading out of the de-interleaved data words from the RAM 6. Although not shown herein, it will be explained below that, in the event that an error flag stored in a particular error flag latch circuit is indicative of an erroneous data word, once that data word is corrected, the condition of the error flag is changed over to represent a correct condition.

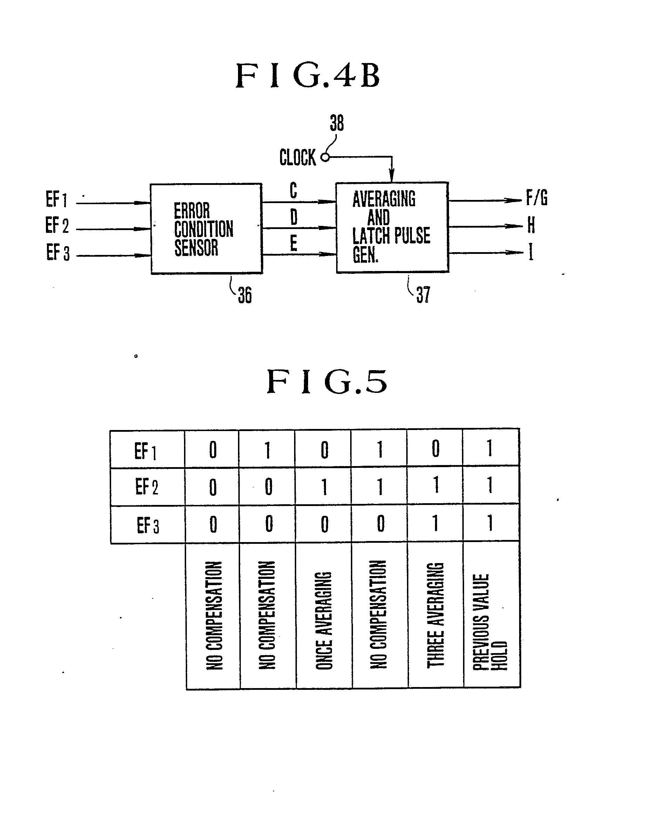

The averaging circuit used in the embodiment of Figure 4A may be a conventional digital averaging circuit 20 which is supplied with two data words and is arranged to produce an interpolated word whose value is substantially equal to the average of such supplied words. The averaging circuit 20 is coupled to receive averaging pulses supplied thereto. These averaging pulses are generated by a suitable pulse generator (described with reference to Figure 4B) and function to enable the averaging circuit 20 to produce an interpolated word in response to each such pulse.

The selector circuits used in the embodiment of Figure 4A comprise selector circuits 22 and 25. The selector circuits 22 and 25 may be constructed as multiplexer circuits, each having a pair of inputs and an output coupled to the averaging circuit 20. The inputs of the selector circuit 22 are coupled to the latch circuits 16 and 17, respectively; and the inputs of the selector circuit 25 are coupled to the latch circuits 18 and 19, respectively. A control signal (not shown) is coupled to the selector circuits 22 and 25 to control which input of each should be coupled to the output thereof. Thus, depending upon this control signal, the selector circuit 22 supplies to the averaging circuit 20 the data words stored in the latch circuit 16 or the data words stored in the latch circuit 17. Likewise, depending upon this control signal, the selector circuit 25 supplies to the averaging circuit 20 the data words stored in the latch circuit 18 or the data words stored in the latch circuit 19.

The switch circuits used in the embodiment of Figure 4A include switch circuits 21, 23 and 14, each constructed as a multiplexer and each being

similar to, for example, the selector circuit 22. The switch circuit 21 includes a pair of inputs coupled to the latch circuit 16 and to the output of the averaging circuit 20, respectively. The output of the switch circuit 21 is coupled to the latch circuit 17. The switch circuits 23 and 24 function as a three-way multiplexer whereby the switch circuit 24 includes a pair of inputs coupled to the averaging circuit 20 and to the latch circuit 19, respectively, and the switch circuit 23 includes a pair of inputs coupled to the latch circuit 17 and to the switch circuit 24, respectively. The combination of the switch circuits 23 and 24 selectively supplies to the latch circuit 18 the data words stored in the latch circuit 17 or the interpolated word produced by the averaging circuit 20 or the data words stored in the latch circuit 19. Suitable control signals (not shown) are supplied to the switch circuits 21, 23 and 24 to determine the particular switching arrangement thereof.

The embodiment of Figure 4A also includes a clear pulse generator 35. The clear pulse generator 35 is coupled to the error flag latch circuit 15 and functions to change over the error indication provided by the error flag in the latch circuit 15 in the event that the data word stored in the latch circuit 17 is corrected prior to being shifted into the latch circuit 18. If this change-over is not effected, the error flag that would be shifted into the error flag latch circuit 15 from the error flag latch circuit 14 concurrently with the shifting in of the corrected data word from the latch circuit 17 into the latch circuit 18 would be a binary "1" and thus·would falsely indicate that the data word stored in the latch circuit 18 is erroneous. Since this data word had been corrected before being shifted into the latch circuit 18, the error flag associated therewith should be changed over. The clear pulse generator 35 is responsive to, for example, a binary "1" stored in the error flag latch circuit 14 coincidentally with a binary "0" stored in the error flag latch circuit 13.

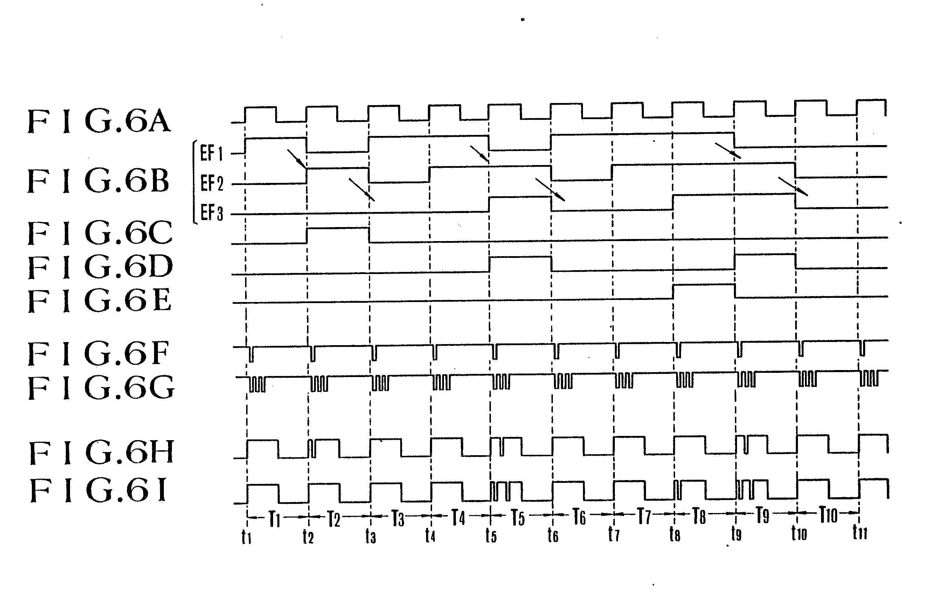

Before describing the operation of the error compensator shown in Figure 4A, reference is made to Figure 5 which is a table representative· of the types of error compensation techniques that are carried out in response to respectively detected error conditions. In the table of Figure 5, the designations $EF_1$, $EF_2$ and $EF_3$ represent the error flags stored in the error flag latch circuits 13, 14 and 15, respectively. As shown, when all of the error flags are reset, no compensation is carried out on the data words stored in the data word register. When the error flag stored in the first latch circuit 13 is set to a binary "1" but the remaining error flags are reset, here too no compensation is carried out. However, if the data word stored in the latch circuit 16 is erroneous, as represented by $EF_1$="1", then, when this data word is shifted into the latch circuit 17, as upon the occurrence of the following shift clock pulse, the data word now stored in the latch circuit 17 will be erroneous ($EF_2$="1"), but the data words stored in the latch circuits 16 and 18 are assumed to be correct ($EF_1$=$EF_3$="0"). On detecting this condition, as by detecting the states of the error flags stored in the error flag register, wherein an erroneous data word is both preceded and followed by correct data words, the once averaging compensation technique is utilized to correct the data word stored in the latch circuit 17. Thus, and as will be described, the erroneous data word in the latch circuit 17 is replaced by an interpolated data word produced by the averaging circuit 20. Upon the occurrence of the next shift clock pulse, this compensated data word will be shifted from the latch circuit 17 to the latch circuit 18. At that time, the clear pulse generator 35 effectively loads the error flag latch circuit 15 with a reset error flag ($EF_3$="0") rather than allowing the error flag stored in the latch circuit 14 ($EF_2$="1") to be shifted thereinto.

Returning to the table shown in Figure 5, if erroneous data words are stored in the latch circuits 16 and 17 but a correct data word is stored in the latch circuit 18 ($EF_1$=$EF_2$="1" and $EF_3$="0"), no compensation is carried out. However, if the contents of the latch circuits 16 and 17 are shifted respectively to the next succeeding latch circuits, and if a correct data word is now shifted into the latch circuit 15 (whereby $EF_1$="0" and $EF_2$=$EF_3$="1"), then the thrice averaging compensation technique is carried out.

In all of the foregoing examples, it has been assumed that a correct or compensated data word is always shifted into the latch circuit 19. This will become apparent from the discussion of the operation of the embodiment·of Figure 4A. If only the data word stored in the latch circuit 19 is correct ($EF_1$=$EF_2$=$EF_3$="1"), then the previous value hold compensation technique is carried out. It will be recognised that this previous value hold compensation is repeated in successive time periods when successive erroneous data words are shifted into the data word register until a correct data word is shifted into the latch circuit 16. At that time, the data word stored in the latch circuit 16 will be correct, the data word stored in the latch circuit 19 is assumed to be correct by reason of the previous value hold compensation, and the data words stored in the latch circuits 17 and 18 are both erroneous. Hence, as discussed above, and as shown by the table of Figure 6, the thrice averaging compensation technique is now carried out.

The operation of the error compensator of Figure 4A will now be described with reference to the timing diagrams illustrated in Figure 6A to 6I. The shift clock pulses which are supplied to the latch circuits comprising the error flag register as well as to the latch circuits 16 and 19 are illustrated in Figure 6A. These shift clock pulses define successive time periods ($T_1$, $T_2$,...$T_{10}$) at the beginning of which ($t_1$, $t_2$,...$t_{10}$, $t_{11}$) the contents of the error flag register and the contents of the data word register are shifted by one stage. In order to simplify the description herein, it is assumed that the contents of the error flag register as well as the contents of the data word register are shifted by one stage to the right, as viewed in Figure 4A.

Figure 6B represents error flags $EF_1$, $EF_2$ and $EF_3$, respectively, shifted through the latch circuits 13, 14 and 15 of the error flag register. From the error flag $EF_1$, it is assumed that, for the data words here under consideration, the first data word is erroneous, the second is correct, the third and fourth data words are both erroneous, the fifth is correct, the sixth, seventh and eighth data words are all erroneous, and the ninth and tenth data words are both correct. The timing waveform of the error flag $EF_2$ indicates that the contents of the latch circuit 13 are merely shifted into the latch circuit 14 at successive shift clock pulses. By reason of the clear pulse generator 35, it should be understood that the contents of the latch circuit 14 are not necessarily shifted into the latch circuit 15 at successive shift clock pulses. The broken lines representing the error flag $EF_3$ in Figure 6B represent those error flags which would have been shifted into the latch circuit 15 but for the operation of the clear pulses generator 35. This will be described in greater detail below. Figure 6C illustrates the waveform produced by suitable gating means when the error condition (a) is detected. That is, when the data word stored in the latch circuit 17 is erroneous, but this data word is preceded and followed by data words which are correct, that is, when the data words stored in the latch circuits 16 and 18 are correct, the waveform shown in Figure 6C is a binary "1". Likewise, the error condition (b) is detected when the error words stored in the latch circuits 17 and 18 are erroneous and the data word stored in the latch circuit 16 is correct. As mentioned above, it is assumed that the data word stored in the latch circuit 19 is always correct. Thus, the waveform shown in Figure 6D is a binary "1" when $EF_2=EF_3="1"$ and $EF_1="0"$. Finally, the error in the latch circuits 16, 17 and 18 are erroneous. Accordingly, the waveform shown in Figure 6E is a binary "1" when $EF_1=EF_2=EF_3="1"$.

It is appreciated that the waveforms shown in Figures 6C, 6D and 6E may be produced by suitable gating circuits which are supplied with the error flags $EF_1$, $EF_2$ and $EF_3$. In addition, a suitable clock generator (not shown) may be provided to generate a number of relatively narrow clock pulses of relatively higher frequency during each shift clock period. That is, during each period defined by the shift clock pulses shown in Figure 6A, a number of such higher frequency clock pulses may be generated. These clock pulses are utilized to produce the averaging pulses F or G which are supplied to the averaging circuit 20. Figure 6F illustrates one averaging pulse during each shift clock period, and Figure 6G illustrates three averaging pulses during each shift clock period. When the waveform of Figure 6C is a binary "1", the averaging pulses F, that is, the averaging pulses illustrated in Figure 6F, are supplied to the averaging circuit 20. When the waveform illustrated in Figure 6D is a binary "1", the averaging pulses G, that is, the averaging pulses illustrated in Figure 6G, are supplied to the averaging circuit 20. It is appreciated that suitable gates may be used to supply the averaging pulses F or G to the averaging circuit 20. The averaging circuit 20 functions to carry out an averaging operation in response to the negative transition in each averaging pulse supplied thereto.

The latch circuit 17 is supplied with latch pulses H shown in Figure 6H, and the latch circuit 18 is supplied with latch pulses I shown in Figure 6I. The purpose of the latch pulses is to enable the latch circuit to which such pulses are supplied to "latch" the data word then supplied thereto. The latch pulses H may be generated in response to the shift clock pulse A, the waveforms shown in Figures 6C and 6D, and the averaging pulses F and G by means of suitable inverters, gating circuits and a counter. Similarly, the latch pulses I may be produced in response to the shift clock pulse A, the waveforms illustrated in Figures 6D and 6E and the averaging pulses F and G by means of inverters, gating circuits and a counter. Alternatively, a conventional microprocessor may be programmed to produce the latch pulses shown in Figures 6H and 6I. In any event, it will be appreciated that latch pulses H and I may readily be produced.

A block diagram representing circuitry by which the waveforms shown in Figures 6C to 6I are generated to illustrated in Figure 4B. This circuitry comprises an error condition sensor 36 which receives the error flags $EF_1$, $EF_2$ and $EF_3$ and, in response to such error flags, generates the waveforms shown in Figures 6C, 6D and 6E. As mentioned above, when the waveform 6C is a binary "1", the once averaging technique is carried out. When the waveform 6D is a binary "1", the thrice averaging technique is carried out. When the waveform 6E is a binary "1", the previous value hold technique is carried out. The waveforms shown in Figures 6C, 6D and 6E, as produced by the error condition sensor 36, are supplied with the aforementioned higher frequency clock pulses which are supplied thereto by way of an input 38. Depending upon which of the waveforms 6C, 6D and 6E is produced, the averaging pulses F or G are generated. Then, depending upon whether the averaging pulses F or G are produced, in conjunction with which of the waveforms 6C, 6D and 6E is a binary "1", the latch pulses H and I are generated, as illustrated in Figures 6H and 6I, respectively.

Let it be assumed that, at the time $t_1$, the data words stored in the latch circuits 17, 18 and 19 are correct and the data word now shifted into the latch circuit 16 is erroneous. In accordance with the assumption, $EF_1="1"$ and $EF_2=EF_3="0"$. From the table in Figure 5, no compensation is carried out at this time. At the time $t_2$, in response to the next shift clock pulse shown in Figure 6A, the erroneous data word stored in the latch circuit 16 is shifted into the latch circuit 17, and the correct data words which had been stored in the latch circuits 17 and 18 are now shifted into the latch circuits 18 and 19, respectively. If it is assumed that the data word now shifted into the latch circuit 16 is correct, then the error condition (a) is detected, whereby $EF_2$="1" and $EF_1=EF_3$="0". That is, the data word stored in the latch circuit 17 is erroneous, but this erroneous data word is preceded and followed, respectively, by correct data words. As a result, the waveform shown in Figure 6C is a binary "1". As a result of this waveform, the selector circuit 22 is controlled to supply the correct data word stored in the latch circuit 16 to the averaging circuit 20, and the selector circuit 25 is controlled to supply to the averaging circuit 20 the correct data word stored in the latch circuit 18. Also, as a result of this waveform shown in Figure 6C, the averaging circuit 20 is supplied with the single averaging pulse F during the shift clock period $T_2$.

Now, in response to the negative transition in the averaging pulse F, the data words in the latch circuits 16 and 18 are averaged by the averaging circuit 20, resulting in an interpolated data word that is supplied to the switch circuit 21. The switch circuit 21 is controlled by the waveform shown in Figure 6C to supply to the latch circuit 17 the interpolated data word produced by the averaging circuit 20. At this time, the switch circuit 23 is also controlled by the waveform shown in Figure 6C to couple the input of the latch circuit 18 to the output of the latch circuit 17.

During the shift clock period $T_2$, the latch pulse H undergoes a positive transition which approximately coincides with the positive transition in the averaging pulse F. As a result of this positive transition, the latch circuit 17 is enabled to store therein the data word supplied thereto. Since the switch circuit 21 supplies to the latch circuit 17 the interpolated data word produced by the averaging circuit 20, it is seen that the erroneous data word which had been stored previously in the latch circuit 17 now is replaced by the interpolated data word produced by the averaging circuit 20. Thus, all of the data words now stored in the data word register are correct.

At the time $t_3$, the beginning of the next shift clock period $T_3$, the error flag which had been stored in the error flag latch circuit 14 should be shifted into the latch circuit 15. However, since the data word stored in the latch circuit 17 has been corrected, and since $EF_2$="1", this error flag should not be shifted, as it is, into the latch circuit 15. The clear pulse generator 35 is responsive to $EF_1$="0" and $EF_2$="1" to prevent the error flag which had been stored in the latch circuit 14 from now being shifted into the latch circuit 15. This is represented by the waveform shown in broken lines for the error flag $EF_3$ during the shift clock period $T_3$, thus indicating that, although the error flag $EF_2$ should have been shifted into the latch circuit 15, the fact that the data word associated with the error flag $EF_2$ had been corrected means that the error flag $EF_2$ is not shifted. Hence, the error flag stored in the latch circuit 15 remains reset as a binary "0".

At the time $t_3$, the next data word is shifted into the latch circuit 16, and the contents that had been stored previously in the latch circuits 16, 17 and 18 are now shifted into the latch circuits 17, 18 and 19, respectively. It is assumed herein that the data word now shifted into the latch circuit 16 at the time $t_3$ is erroneous. Thus, the error flag shifted into the latch circuit 13 is set to a binary "1" as illustrated in Figure 6B. During the shift clock period $T_3$, the switch circuits 21 and 23 are controlled so as to couple the data words stored in the latch circuits 16 and 17 to the latch circuits 17 and 18, respectively, in response to the next shift clock pulse at the time $t_4$. The operation of the selectors 22 and 25 during the shift clock period $T_3$ thus has no effect.

At the time $t_4$, it is assumed that the next data word shifted into the latch circuit 16 is erroneous. Thus, at the times $t_3$ and $t_4$, two successive erroneous data words are shifted into the data word register. During the shift clock period $T_4$, the switches 21 and 23 remain in their previous condition and the operating conditions of the selectors 22 and 25 here to have no effect.

It is now assumed that, at the shift clock time $t_5$, a correct data word is shifted into the latch circuit 16. Thus, the successive data words which had been received by the data word register at the times $t_2$, $t_3$, $t_4$ and $t_5$ are seen to be correct, erroneous, erroneous and correct, respectively. Since two successive data words which had been received by the data word register at the times $t_2$, $t_3$, $t_4$ and $t_5$ are seen to be correct, erroneous, erroneous and correct, respectively. Since two successive data words had been preceded and followed by correct data words, the error condition (b) is detected. It is observed that, at the time $t_5$, error flag $EF_1$="0" and error flags $EF_2=EF_3$="1". From the table of Figure 5, it is seen that the thrice averaging compensation technique now should be carried out. This is indicated by the binary "1" of the waveform shown in Figure 6D.

In carrying out the thrice averaging compensation operations, the selectors 22 and 25 are initially controlled in response to the waveform shown in Figure 6D to supply to the averaging circuit 20 the correct data words stored in the latch circuits 16 and 19. Also, the averaging circuit 20 is now supplied with averaging pulses G, shown in Figure 6G. In response to the negative transition of the first of these averaging pulses, the averaging circuit 20 produces a pseudo interpolated word derived from the average of the data words supplied thereto from the latch circuits 16 and 19. The switch circuits 23 and 24 are controlled by the waveform shown in Figure 6D to supply this pseudo interpolated word to the latch circuit 18.

It is seen from Figure 6I that, during the shift clock period $T_5$, the latch circuit 18 is supplied with the latch pulse I having a positive transition of the first averaging pulse shown in Figure 6G. Thus, the latch circuit 18 is enabled by this positive transition in the latch pulse I temporarily in store therein the pseudo interpolated word produced by the averaging circuit 20. Now, the selector circuit 25 is controlled to change over its condition, whereupon the pseudo interpolated word stored in the latch circuit 18 is supplied to the averaging circuit 20 together with the correct data word stored in the latch circuit 16. The averaging circuit 20 now responds to the second negative transition in the averaging pulses G during the shift clock period $T_5$ to produce an interpolated data word. The switch circuit 21 is controlled to supply this interpolated data word from the averaging circuit 20 to the latch circuit 17.

As illustrated in Figure 6H, during the shift clock period $T_5$, the latch clock pulse H undergoes a positive transition which substantially coincides with the positive transition of the second averaging pulse G. The latch circuit 17 responds to this positive transition of the latch clock pulse H to store therein the interpolated data word which is now supplied thereto from the averaging circuit 20 by the switch circuit 21. Thus, the erroneous data word which had been stored previously in the latch circuit 17 is now replaced by the interpolated data word produced by the averaging circuit 20.

Now, the condition of the selector 22 is changed over so as to supply to the averaging circuit 20 the interpolated data word which has just been stored in the latch circuit 17. The condition of the selector 25 is also changed over, thereby supplying to the averaging cicuit 20 the correct data word stored in the latch circuit 19. The averaging circuit 20 responds to the third negative transition of the averaging pulses G so as to average the interpolated data word supplied from the latch circuit 17 and the correct data word supplied from the latch circuit 19 to produce yet another interpolated data word. The switches 23 and 24 are controlled (in response to the binary "1" of the waveform shown in Figure 6D) to supply this other interpolated data word produced by the averaging circuit 20 to the latch circuit 18.

Now, the latch circuit 18 responds to the next positive transition of the latch clock pulse I during the shift clock period $T_5$ to store the interpolated data word now supplied thereto from the averaging circuit 20 by the switch circuits 23 and 24. It is seen that this positive transition in the latch clock pulse I substantially coincides with the positive transition of the third averaging pulse G.

To summarise, when the condition (b) is detected, that is, when two successive data words are preceded and followed, respectively, by correct data words, the correct data words stored in the latch circuits 16 and 19 are first averaged to produced a pseudo interpolated word. This pseudo interpolated word is stored temporarily in the latch circuit 18 and is averaged by the averaging circuit 20 with the correct data word stored in the latch circuit 16. As a result, a first interpolated data word is produced and is stored in the latch circuit 17 in place of the erroneous data word which had been stored therein. Then, the interpolated data word stored in the latch circuit 17 is averaged with the correct data word stored in the latch circuit 19 to produce a second interpolated data word, this second interpolated data word now being stored in the latch circuit 18 in place of the pseudo interpolated word which had been stored therein.

In the foregoing description, the pseudo interpolated data word is stored in the latch circuit 18 and is then averaged with the correct data word stored in the latch circuit 16, resulting in a first interpolated data word that is supplied to the latch circuit 17. Alternatively, the pseudo interpolated word may be stored in the latch circuit 17, and this pseudo interpolated word then may be averaged with the correct data word stored in the latch circuit 19, resulting in an interpolated data word which then is stored in the latch circuit 18. This interpolated data word stored in the latch circuit 18 then may be averaged with the correct data word stored in the latch circuit 16 to produce another interpolated data word which is stored in the latch circuit 17. In either operative embodiment, it is seen that the averaging circuit 20 undergoes three successive averaging operations to produce the pseudo interpolated word, then the first interpolated data word and then the second interpolated data word.

In the embodiment shown in Figure 4A, it is assumed that the data word register need be of sufficient capacity merely to store four successive data words. If desired, any greater number of data words may be stored in the data word register. Also, in order to carry out the once averaging compensation operation, any three successive data words may be used, whereby the erroneous data word is replaced by an interpolated data word derived from the average of the preceding and following data words. Also, the thrice averaging compensation operation may be replaced by other plural averaging techniques, whereupon a plurality of successive erroneous data words are replaced by interpolated data words which are derived from averaging operations utilizing the data word which precede and follow the erroneous ones. Still further, other more complicated compensation techniques may be used in place of the once averaging and thrice averaging compensation operations described herein.

Returning now to the operation represented by the waveform diagrams of Figure 6, it is appreciated that, during the shift clock period $T_5$, the erroneous data words which had been stored in the latch circuits 17 and 18 are replaced by interpolated data words. Since the data word now stored in the latch circuit 17 is assumed to be correct, the error flag which accompanied the data word previously stored therein should not be shifted into the latch circuit 15 at the next shift clock pulse at the time $t_6$. The clear pulse generator 35 responds to the error flags $EF_1 = "0"$ and $EF_2 = "1"$ during the shift clock period $T_5$ to supply a clear pulse to the latch circuit 15 at the time $t_6$. Hence, the error flag $EF_2 = "1"$ is correctly not shifted into the latch circuit 15 at the time $t_6$.

Let it now be assumed that, at the times $t_6$, $t_7$ and $t_8$, three successive erroneous data words are shifted into the data word register. Hence, at the time $t_8$, the data words stored in the latch circuits 16, 17 and 18 are erroneous (indicated by the error flags $EF_1=EF_2=EF_3="1"$), but the data word now stored in the latch circuit 19 is correct. It is recognized that the foregoing corresponds to the error condition (c), resulting in the waveform of Figure 6E exhibiting a binary "1". When the waveform of Figure 6E is a binary "1", the switch circuit 21 couples the output of the latch circuit 16 to the latch circuit 17, thereby supplying the erroneous data word stored in the latch circuit 16 to the latch circuit 17 at the beginning of the next-following shift clock period $T_9$; and the switch circuits 23 and 24 now respond to the binary "1" of the waveform of Figure 6E to feed back the output of the latch circuit 19 to the input of the latch circuit 18.

As shown in Figure 6I, the latch clock pulse I undergoes a positive transition during the shift clock period $T_8$. The latch circuit 18 responds to this positive transition of the latch clock pulse I so as to store therein the data word which is supplied thereto from the latch circuit 19 via the switch circuits 23 and 24. Hence, at the time $t_9$, the data word stored in the latch circuit 18, which is now identical to the data word stored in the latch circuit 19, is shifted into the latch circuit 19, whereby the previous value of this data word is used once again.

From Figure 6B it is assumed that, at the time $t_9$, the next data word supplied to the data word register is correct. Since the data words which had been stored in the latch circuits 16 and 17 have been shifted into the latch circuits 17 and 18, respectively and since the data word now stored in the latch circuit 19 is assumed to be correct by means of the previous value hold operation which had been carried out, it will be appreciated that, at the time $t_9$, the error condition (b) is detected. That is, the successive data words stored in the latch circuits 17 and 18 are erroneous, and these erroneous words are preceded and followed, respectively, by correct data words. Hence, during the shift clock period $T_9$, the thrice averaging compensation operation is carried out. This operation had been described in detail above.

From the foregoing description, it is appreciated that data words are shifted sequentially through the data word register comprising the latch circuits 16 to 19. The output of the latch circuit 19 is coupled to the output terminal 10 from which the data words are transmitted to further apparatus, such as digital-to-analog converters, and the like. It is also appreciated that erroneous data words stored in the data word register are compensated by means of the once averaging, thrice averaging or previous value hold technique, depending upon the particular error condition which is detected. Hence, although an erroneous data word may be shifted into the data word register, the output terminal 10 thereof is supplied with compensated data words. The error compensator illustrated in Figure 4A is readily adapted such that different compensation techniques are carried out in order to account for different error conditions. In particular, the previous value hold compensation operation, which affords the least accurate approximation of a correct data word, is carried out only if more accurate compensation techniques cannot be used because of, for example, a relatively large burst error.

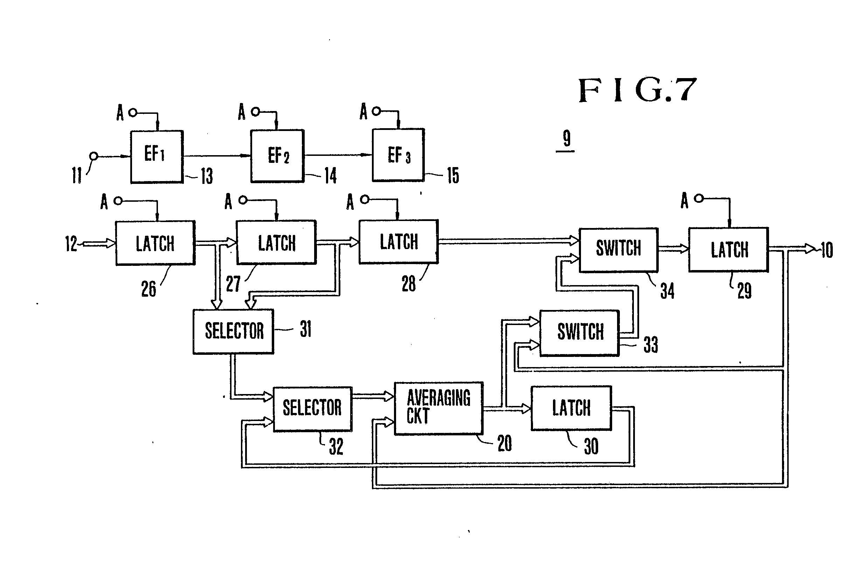

In the embodiment of Figure 4A, erroneous data words are corrected before they can be shifted into the latch circuit 19, the output stage of the data word register. As discussed above, if an erroneous data word is shifted into the latch circuit 17 and/or the latch circuit 18, such erroneous data words are corrected before they can be shifted to the next-following stage of the data word register. Figure 7 is a block diagram representing another embodiment of the invention wherein an erroneous data word is not corrected until it is to be shifted into the output stage of the data word register.

The embodiment of Figure 7 includes a data word register comprising latch circuits 26, 27, 28 and 29, an error flag register comprising the latch circuits 13, 14 and 15, the averaging circuit 20, selector circuits 31 and 32 and switch circuits 33 and 34. The embodiment of Figure 7 also includes a latch circuit 30 coupled to the output of the averaging circuit 20. Since the error flag register of Figure 7 is substantially identical to the error flag register described above with respect to Figure 4A, further description thereof is not provided. It should be mentioned, however, that the clear pulse generator 35 is not utilized in the error flag register of Figure 7. It will become apparent that such a clear pulse generator is not needed.

The averaging circuit 20 includes one input fixedly coupled to the output of the latch circuit 29 and another input which is arranged to be supplied by means of the selector circuits 31 and 32 with data words stored selectively in the latch circuits 26, 27 or 30. The selector circuits 31 and 32 may be similar to the aforedescribed selector circuits 22 and 25, and need not be described further herein.

The output of the averaging circuit 20 is coupled to the latch circuit 30 and, in addition, is coupled by way of the switch circuits 33 and 34 to the latch circuit 29. The switch circuits 33 and 34 are arranged selectively to supply to the latch circuit 29 the data word stored in the latch circuit 28, or the interpolated word produced by the averaging circuit 20, or to re-supply to the latch circuit 29 the data word already stored therein.

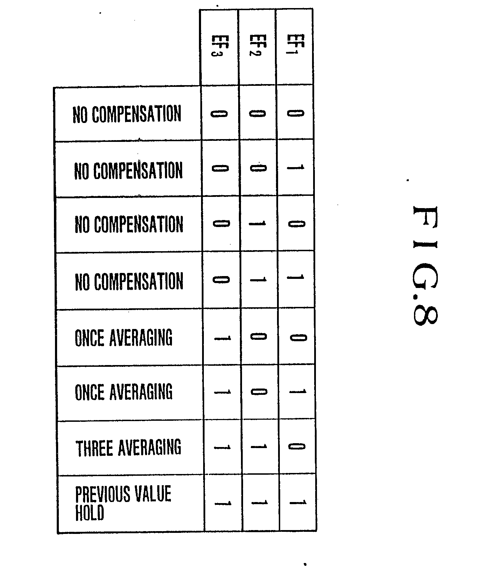

Before describing the operation of the embodiment of Figure 7, reference is made to the table in Figure 8 which represents all of the various possible conditions of the error flags $EF_1$, $EF_2$ and $EF_3$. Depending upon the sensed conditions of these error flags, a particular error compensation technique is carried out. It is noted that, when a correct data word is stored in the latch circuit 28, as represented by the error flag $EF_3="0"$, a compensation operation is not performed. This is because the correct data word will be shifted, at the next shift clock pulse, into the latch circuit 29, and thereafter, this correct data word will be shifted to the output terminal 10. Thus, since a correct data word will be shifted out of the data word register, there is no need to correct it; and, accordingly, error compensation is not carried out if the data word stored in the latch circuit 28 is correct. However, error compensation is implemented whenever an erroneous data word is shifted into the latch circuit 28. Such error compensation is limited to correcting the data word stored in the latch circuit 28 so as to ensure that, upon the next shift clock pulse, a correct data word will be shifted into the latch circuit 29, the output stage of the data word register.

In view of the foregoing, it is seen from the table of Figure 8 that once averaging compensation is carried out when an erroneous data word is shifted into the latch circuit 28 but a correct data word is shifted into the latch circuit 27. That is, the once averaging compensation technique is implemented when $EF_2="0"$ and $EF_3="1"$.

Finally, when an erroneous data word is stored in each of the latch circuits 26, 27 and 28, that is, when three successive data words are erroneous, previous value hold compensation is carried out. Thus, when $EF_1=EF_2=EF_3="1"$, this previous value hold compensation technique is implemented.

When erroneous data words are stored in the latch circuits 27 and 28, the thrice averaging compensation technique is carried out. Such erroneous data words are represented by the set states of their corresponding error flags; and, hence, when the error condition represented by $EF_2=EF_3="1"$ and $EF_1="0"$ is detected, thrice averaging compensation is implemented.

In all of the foregoing error compensation techniques carried out by the embodiment of Figure 7, the data word stored in the latch circuit 28 is replaced by a correct or compensated data word which is shifted into the latch circuit 29 at the next-following shift clock pulse. It is appreciated that the contents of the latch circuits 26 and 27 are shifted into the latch circuits 27 and 28, respectively, in response to this next-following shift clock pulse; and the latch circuit 26 concurrently receives the next succeding data word. If the previous value hold compensation operation had been carried out immediately prior to the shift clock pulse, the error condition of the next succeeding data word which is shifted into the latch circuit 26 determines the type of error compensation operation that is next carried out. For example, if a correct data word is shifted imto the latch circuit 26, then thrice averaging compensation will be performed during the next shift clock period. However, if an erroneous data word is shifted into the latch circuit 26, then previous value hold compensation will be performed once again during the next shift clock period.

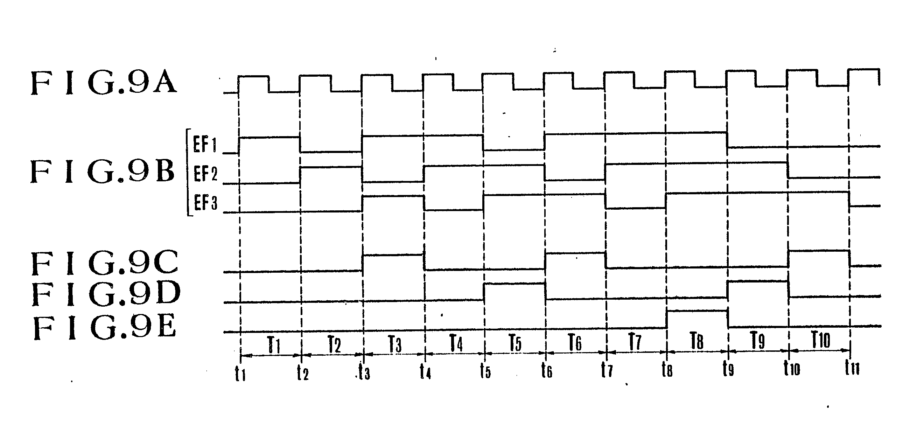

The operation of the error compensation apparatus shown in Figure 7 will now be described with reference to the timing diagrams in Figures 9A to 9E. It will be recognised that the waveforms shown in Figures 9A to 9E are similar to the waveforms shown in Figures 6A to 6E. Thus, Figure 9A represents the shift clock pulses A which are supplied to each of the error flag latch circuits 13 to 15 and to each of the data word latch circuits 26 to 29. These shift clock pulses are assumed to occur at the times $t_1$, $t_2$, $t_3$,...$t_{10}$, $t_{11}$, and define shift clock periods $T_1$, $T_2$,...$T_{10}$, respectively. Successive data words are supplied to the input terminal 12 of the data word register in synchronism with the shift clock pulses A.

Figure 9B represents the error flags during respective shift clock periods. The waveform illustrated in Figure 9C is seen to exhibit a binary "1" level when an erroneous data word is stored in the latch circuit 28 ($EF_3="1"$) and a correct data word is stored in the latch circuit 27 ($EF_2="0"$). As was discussed previously with respect to the embodiment of Figure 4A, when the waveform of Figure 9C is a binary "1", the once averaging compensation operation is performed. Hence, the waveform of Figure 9C may be viewed as an error identifying signal which identifies the occurrence of the error condition (a), that is, an erroneous data word preceded and followed, respectively, by correct data words.

The waveform of Figure 9D is a binary "1" when $EF_1="0"$ and $EF_2=EF_3="1"$. When the waveform of Figure 9D exhibits its binary "1" level, the thrice averaging operation is carried out. This waveform may be viewed as an error identifying signal which identifies the presence of the error condition (b), that is, a plurality of successive erroneous data words preceded and followed, respectively, by correct data words.

The waveform of Figure 9E exhibits its binary "1" level when all of the data words stored in the latch circuits 26, 27 and 28 are erroneous, that is, when $EF_1=EF_2=EF_3="1"$. This waveform thus identifies the presence of the error condition (c), that is a predetermined number (for example, three) of successive erroneous data words preceded by a correct data word.

Let it be assumed that the data words whose error conditions are represented by the waveforms of Figure 9B are supplied successively to the data word register of Figure 7. Let it further be assumed that, prior to the time $t_1$, a correct data word followed by an erroneous data word are received successively by the data word register, the contents of this register are as represented by Figure 9B at the time $t_3$. Hence, the waveform of Figure 9C exhibits its binary "1" level, identifying the presence of the condition (a). Accordingly, the selector circuits 31 and 32 are controlled in response to this detected error condition to supply to the averaging circuit 20 the correct data word stored in the latch circuit 27. Since the output of the latch circuit 29 is connected directly to the averaging circuit 20, it will be appreciated that the averaging circuit 20 responds to an averaging pulse supplied thereto to produce an interpolated data word equal to the average of the data words stored in the latch circuits 27 and 29. Although not shown in Figure 9, the averaging pulses supplied to the averaging circuit 20 may be similar to the averaging pulses F of Figure 6F. As will be described below, a modification is made to these averaging pulses when the error condition (b) is detected and the thrice averaging operation is carried out. When this error condition is detected, two successive averaging pulses are supplied to the averaging circuit 20 during a shift clock period. This will become clear from the description below.

When the error condition (a) is detected and the once averaging operation is carried out, the switch circuits 33 and 34 are controlled so as to couple the latch circuit 29 to the averaging circuit 20. That is, during the shift clock period $T_3$, the connection of the output of the latch circuit 28 to the input of the latch circuit 29 is interrupted and, in place thereof, the output of the averaging circuit 20 is connected to the input of the latch circuit 29. Consequently, at the time $t_4$, the time of occurrence of the next-following shift clock pulse, the latch circuit 29 is enabled to store the data word supplied thereto, which data word is the interpolated data word that had been produced by the averaging circuit 20. It is seen, therefore, that the erroneous data word which had been stored previously in the latch circuit 28 is not shifted into the latch circuit 29 but, rather, is replaced by a compensated data word. Of course, at the time $t_4$, the contents of the latch circuits 26 and 27 are shifted into the latch circuits 27 and 28, respectively, and the next data word is shifted into the latch circuit 26. It is assumed that this next data word is erroneous, as represented by $EF_1="1"$ at the time $t_4$.

At the time $t_4$, a correct data word is shifted into the latch circuit 28. Hence, no error compensation is carried out during the shift clock period $T_4$. But, at the time $t_5$, it is assumed that a correct data word is shifted into the latch circuit 26 and, as represented by the waveforms of the error flags $EF_1$, $EF_2$ and $EF_3$ in Figure 9B, erroneous data words are shifted into the latch circuits 27 and 28. Consequently, the error condition (b) is detected, as represented by the binary "1" waveform of Figure 9D at the time $t_5$, thus commanding the operation of the thrice averaging technique.

In response to the detection of the error condition (b), the selector circuits 31 and 32 are controlled so as to supply to the averaging circuit 20 the correct data word stored in the latch circuit 26. The averaging circuit 20 responds to the averaging pulse supplied thereto to produce a pseudo interpolated word derived from the average of the data word supplied from the latch circuit 26 and the data word supplied from the latch circuit 29. This pseudo interpolated word is stored temporarily in the latch circuit 30. Although not shown in Figure 7, it should be appreciated that the latch circuit 30 is supplied with a latch pulse which, for example, may be the positive transition in the averaging pulse that has been supplied to the averaging circuit 20. For example, the latch circuit 30 may be supplied with the positive transition of the averaging pulse F shown in Figure 6F.

Now, since the error condition (b) had been detected, the selector switch 32 is changed over so as to supply the pseudo interpolated word stored in the latch circuit 30 to the averaging circuit 20. Another averaging pulse is supplied to the averaging circuit 20 during the shift clock period $T_5$, whereupon the averaging circuit 20 produces an interpolated data word derived by averaging the pseudo interpolated word supplied thereto from the latch circuit 30 by way of the selector switch 32 and the correct data word which still remains stored in the latch circuit 29. The switch circuits 33 and 34 are now controlled in response to the detected condition (b) to couple the latch circuit 29 to the averaging circuit 20. Hence, at the time $t_6$, upon the occurrence of the next shift clock pulse, the interpolated data word which is produced by the averaging circuit 20 is shifted into the latch circuit 29, and the erroneous data word which had been stored previously in the latch circuit 28 is effectively erased.

At the time $t_6$, the erroneous data which had been stored in the latch circuit 27 is shifted into the latch circuit 28, and the correct data word which had been stored in the latch circuit 26 is stored in the latch circuit 27. It is assumed that, at this time, the next-following data word which is supplied to the data word register is erroneous.

Since the latch circuit 29 is supplied with an interpolated data word which, for the purpose of the operation of the illustrated embodiment is assumed to be correct, it is seen that, at the time $t_6$, a correct data word is stored in the latch circuit 29, an erroneous data word is stored in the latch circuit 28 and a correct data word is stored in the latch circuit 27. Hence, at the time $t_6$, the error condition (a) is detected. Accordingly, the once averaging compensation technique is carried out. It will be appreciated that, at the time $t_7$, upon the occurrence of the next-following shift clock pulse, an interpolated data word will be shifted into the latch circuit 29 from the averaging circuit 20 in place of the erroneous data word stored in the latch circuit 28.

From the foregoing description, it is seen that, when the error condition (b) is detected, the thrice averaging operation is carried out over two successive shift clock periods. That is, during the first shift clock period, the first of the two successive erroneous data words is replaced by an interpolated data word. Then, in the next shift clock period, the second erroneous data word is replaced by another interpolated data word. Although these successive replacements are carried out during successive shift clock periods, it will be recognised that the interpolated data words which are used to replace the erroneous data words are consistent with the equations which have been set forth hereinabove.

Let it now be assumed that, at the times $t_6$, $t_7$ and $t_8$, three successive erroneous data words are supplied to the data word register. This is represented by the waveform of the error flag $EF_1$ of Figure 9B. At the time $t_8$, the error flag stored in each of the error flag latch circuits 13, 14 and 15 is a binary "1", thus indicating the presence of the error condition (c). Hence, the waveform of Figure 9E exhibits its binary "1" level.

In response to the detection of the error condition (c), the switch circuits 33 and 34 are controlled so as to couple the output of the latch circuit 29 back to the input thereof. Thus, at the time $t_9$, upon the occurrence of the next-following shift clock pulse, the data word which had been stored in the latch circuit 29 is fed back and stored therein once again. Furthermore, the erroneous data word which had been stored in the latch circuit 28 is erased, and the erroneous data words which had been stored in the latch circuits 26 and 27 are shifted into the latch circuits 27 and 28, respectively.

If it is assumed that, at the time $t_9$, the next successive data word which is supplied to the data word register is correct, then the contents of the data word register are seen to be a correct data word stored in the latch circuit 29 (it is assumed, by carrying out the previous value hold compensation technique, the latch circuit 29 retains a correct data word), erroneous data words stored in the latch circuits 27 and 28 and a correct data word stored in the latch circuit 26. Thus, at the time $t_9$, the error condition (b) is detected, as shown by the binary "1" waveform of Figure 9D. Hence, during the shift clock period $T_9$, the thrice averaging compensation operation is carried out in the manner described above. In accordance with this operation, the erroneous data word stored in the latch circuit 28 is not shifted into the latch circuit 29 at the time $t_{10}$; but, rather, the interpolated data word produced by the averaging circuit 20 is. Accordingly, at the time $t_{10}$, upon the occurrence of the next shift clock pulse, the erroneous data word which had been stored in the latch circuit 27 is shifted into the latch circuit 28, and the correct data word which had been stored in the latch circuit 26 is shifted into the latch circuit 27. It is assumed that, at this time, the next succeeding data word which is supplied to the data word register is correct. Consequently, at the time $t_{10}$, the error condition (a) is detected, and the once averaging operation is carried out during the shift clock period $T_{10}$.

As was described with reference to the embodiment of Figure 4A, it is seen that, after the previous value hold compensation operation is implemented, the thrice averaging compensation technique is carried out in the next-following shift clock period, provided that the next data word which is supplied to the data word register is correct.

It is also seen that, in the embodiment of Figure 7, the thrice averaging operation is carried out in successive shift clock periods. This is because, in the embodiment of Figure 7, only the data word which is stored in the latch circuit 28 need be corrected during any shift clock period. If this data word is followed by another erroneous data word, then this following data word is corrected once it is supplied to the latch circuit 28.

Various modifications are of course possible. For example, the thrice averaging compensation technique need not be limited solely to correcting two successive erroneous data words that are preceded and followed, respectively, by correct data words. Alternatively, n successive erroneous data words may be compensated by multiple interpolation operations if these n data words are preceded and followed, respectively, by m correct data words. In any event, a preferred feature is to utilize the previous value hold compensation operation only when interpolation compensation cannot be carried out effectively. Thus, close approximations to correct data words are generally attained.

It is also contemplated that the apparatus illustrated in Figures 4 and 7 may be implemented either by discrete logic circuits or by a suitably programmed microprocessor. If the latter, the microprocessor may be conventional, such as those manufactured by Intel Corporation, Motorola Corporation, Zilog, or Texas Instruments.

## Claims

1. Apparatus for selectively compensating burst errors of variable length in successive data words, the apparatus comprising: an input (12, 16 to 19) for receiving said successive data words; identifying means (13 to 15) for identifying which data words are erroneous and correct, respectively; interpolating means (20) for producing an interpolated data word by averaging two data words supplied thereto; sensing means (36) for sensing the following condition:

(a) the presence of an erroneous data word preceded and followed by respective correct data words, supply means (22, 25) responsive to the sensing of said condition (a) for supplying to said interpolating means (20) the respective preceding and following correct data words; interpolation control means coupled to said interpolating means (20) and to said sensing means (36) and responsive to said condition (a) for controlling said interpolating means (20) to operate once; and replacement means (21, 23) coupled to said interpolating means (20) and to said sensing means (36) and responsive to said condition (a) for replacing the erroneous data word with the interpolated data word and for replacing a data word of a plurality of successive erroneous data words by a preceding data word; characterised in that: said sensing means (36) further senses the following conditions:

(b) the presence of a first plurality of successive erroneous data words preceded and followed by respective correct data words, and

(c) the presence of a second plurality of successive erroneous data words preceded by a correct data word; said second plurality of successive erroneous data words of said condition (c) exceeding said first plurality of successive erroneous data words of said condition (b); said supply means (22, 25) is further responsive to the sensing of said condition (b) for supplying to said interpolating means (20) the respective preceding and following correct data words; said interpolation control means is further responsive to said condition (b) for controlling said interpolating means (20) to operate a plurality of times to produce a plurality of interpolated data words, said interpolation control means including means responsive to said condition (b) temporarily to store a pseudo interpolated data word produced by said interpolating means (20) in response to the averaging of said preceding and following data words, and means for supplying the temporarily stored pseudo interpolated data word and one of said preceding and following data words to said interpolating means (20) for averaging therein to produce a first interpolated data word; and said replacement means (21, 23) further being responsive to said condition (b) for replacing a first erroneous data word with said interpolated data word; and

said replacement means (21, 23) further being responsive to said condition (c) for replacing at least the first of said second plurality of successive erroneous data words with the preceding correct data word.

2. Apparatus according to claim 1 wherein said interpolation control means further includes means for supplying said first interpolated data word and the other of said preceding and following data words to said interpolating means (20) for averaging therein to produce a second interpolated data word, and wherein said replacement means (21, 23) includes means for replacing a first of two successive erroneous data words with said first interpolated data word, and means for replacing a second of said two successive erroneous data words with said second interpolated data word.

3. Apparatus according to claim 1 wherein each successive data word is accompanied by an error flag, and said identifying means (13 to 15) includes flag storage means (13 to 15) for storing the error flags of said received successive data words.

4. Apparatus according to claim 3 wherein said input (12, 16 to 19) includes data word register means (16 to 19) having a plurality of stages for storing respective data words; and shift clock means coupled to said data word register means (16 to 19) for shifting a plurality of data words into successive stages in successive shift clock period.

5. Apparatus according to claim 4 wherein said flag storage means comprises flag register means (13 to 15) having a plurality of stages for storing respective error flags of said data words and coupled to said shift clock means for shifting successive error flags into successive flag register stages in said successive shift clock periods.

6. Apparatus according to claim 5 wherein said sensing means includes means (36) coupled to the stages of said flag register (13 to 15) for detecting the conditions of the respective error flags stored in said flag register (13 to 15), thereby sensing said conditions (a), (b) and (c), respectively.

7. Apparatus according to claim 6 wherein said supply means includes selector means (22, 25) coupled to preselected stages of said data word register means (16 to 19) for supplying the data words stored in selected stages to said interpolating means (20) as a function of the detected conditions of the stored error flags.

8. Apparatus according to claim 7 wherein said interpolation control means includes pulse generating means for generating one averaging pulse and for generating a plurality of averaging pulses during a shift clock period, and averaging pulse supply means responsive to the detected conditions of the stored error flags selectively to supply said one averaging pulse or said plurality of averaging pulses to said interpolating means (20).

9. Apparatus according to claim 8 wherein said data word register means (16 to 19) includes four stages and said flag register (13 to 15) includes three stages for storing the error flags of the first, second and third data words respectively stored in the first, second and third stages of said data word register means (16 to 19).

10. Apparatus according to claim 9 wherein said selector means comprises a first selector (22) coupled to said first and second stages (16, 17) of said data word register means (16 to 19) for selectively supplying to said interpolating means (20) the data word stored in said first or second stages (16, 17), and a second selector (25) coupled to said third and fourth stages (18, 19) of said data register means (16 to 19) for selectively supplying to said interpolating means (20) the data word stored in said third or fourth stage (18, 19).

11. Apparatus according to claim 10 wherein said first and second selectors (22, 25) and said averaging pulse supply means are responsive to the detection of an error condition of the error flag stored in the second stage (14) of said error flag register (13 to 15) and the detection of a correct condition of the error flag stored in the third stage (15) of said error flag register (13 to 15) to supply to said interpolating means (20) the data words stored in the first and third stages (16, 18) of said data word register means (16 to 19), and to supply said one averaging pulse to said interpolating means (20), whereby an interpolated word derived from the average of the supplied data words is produced.

12. Apparatus according to claim 10 wherein said replacement means includes a first switch (21) for selectively supplying to said second stage (17) of said data word register means (16 to 19) either the data word stored in said first stage (16) or the interpolated word produced by said interpolating means (20), said first switch (21) being responsive to the detection of said condition (a) to supply said interpolated data word to said second stage (17) of said data word register means (16 to 19) for storage therein prior to the beginning of the next shift clock period and to change over the error flag stored in the second stage (14) of said error flag register (13 to 15) from an error condition to a correct condition; and said replacement means further includes a second switch (23) coupled to the third stage (18) of said data word register means (16 to 19).

## Revendications

1. Appareil pour compenser sélectivement des séries d'erreurs de longueurs variables dans des mots successifs de données, l'appareil comportant: une entrée (12, 16 à 19) pour recevoir lesdits mots successifs de données, un dispositif d'identification (13 à 15) pour identifier les mots de données qui sont respectivement erronés et corrects; un dispositif d'interpolation (20) qui produit un mot de donnée interpolé en faisant la moyenne de deux mots de données qui lui sont fournis, un dispositif de détection (36) pour détecter les conditions suivantes:

(a) la présence d'un mot de données erroné précédé et suivi par des mots respectifs de donnée corrects, un dispositif d'application (22, 25) réagissant à la détection de ladite condition (a) en appliquant audit dispositif d'interpolation (20) les mots respectifs de donnée corrects précédent et suivant; un dispositif de commande d'interpolation couplé avec ledit dispositif d'interpolation (20) et avec ledit dispositif de détection (36) et réagissant à ladite condition (a) en commandant ledit dispositif d'interpolation (20) pour qu'il fonctionne une fois; et un dispositif de remplacement (21, 23) couplé avec ledit dispositif d'interpolation (20) et avec ledit dispositif de détection (36) et réagissant à ladite condition (a) en remplaçant le mot de donnée erroné par le mot de donnée interpolé et en remplaçant un mot de donnée parmi plusieurs mots successifs erronés de donnée par un mot de donnée précédent; caractérisé en ce que; ledit dispositif de détection (36) détecte en outre les conditions suivantes:

(b) la présence d'un premier groupe de mots successifs erronés de donnée précédés et suivis par des mots respectifs de donnée corrects et

(c) la présence d'un second groupe de mots successifs erronés de donnée précédés par un mot de données correct; ledit second groupe de mots successifs erronés de données de ladite condition (c) dépassant ledit premier groupe de mots successifs erronés de données de ladite condition (b); ledit dispositif d'application (22, 25) réagissant en outre à ladite détection (b) en appliquant audit dispositif d'interpolation (20) les mots respectifs corrects de données précédent et suivant; ledit dispositif de commande d'interpolation réagissant en outre à ladite condition (b) en commandant ledit dispositif d'interpolation (20) pour fonctionner plusieurs fois afin de produire plusieurs mots de données interpolés, ledit dispositif de commande d'interpolation comprenant un dispositif qui réagit à ladite condition (b) en mémorisant momentanément un mot de donnée pseudo-interpolé produit par ledit dispositif d'interpolation (20) en réponse à la moyenne desdits mots de données précédent et suivant, et un dispositif qui applique le mot de donnée pseudo-interpolé mémorisé momentanément et l'un desdits mots de données précédent et suivant, audit dispositif d'interpolation (20) pour en faire la moyenne et produire un premier mot de données interpolé; ledit dispositif de remplacement (21, 23) réagissant en outre à ladite condition (b) en remplaçant un premier mot de donnée erroné par ledit mot de donnée interpolé; et ledit dispositif de remplacement (21, 23) réagissant en outre à ladite condition (c) en remplaçant au moins le premier dudit second groupe de mots successifs erronés de données par le mot de donnée correct précédent.

2. Appareil selon la revendication 1, dans lequel ledit dispositif de commande d'interpolation comporte en outre un dispositif qui applique le premier mot de donnée interpolé et l'autre desdits mots de données précédent et suivant audit dispositif d'interpolation (20) pour en faire la moyenne et produire un second mot de données interpolé, et dans lequel ledit dispositif de remplacement (21, 23) comporte un dispositif pour remplacer un premier de deux mots successifs erronés de données par ledit premier mot de donnée interpolé et un dispositif pour remplacer le second desdits deux mots successifs erronés de données par ledit second mot de données interpolé.

3. Appareil selon la revendication 1, dans lequel chaque mot successif de données est accompagné par un marqueur d'erreur, et ledit dispositif d'identification (13 à 15) comporte un dispositif de mémorisation de marqueur (13 à 15) pour mémoriser les marqueurs d'erreurs desdits mots successifs de données reçus.

4. Appareil selon la revendication 3, dans lequel ladite entrée (12, 16 à 19) comporte un registre de mots de données (16 à 19) comprenant plusieurs étages pour mémoriser des mots de données respectifs; et un circuit d'horloge à décalage couplé avec ledit registre de mots de données (16 à 19) pour décaler plusieurs mots de données dans des étages successifs, pendant des périodes successives d'horloge de décalage.

5. Appareil selon la revendication 4, dans lequel ledit dispositif de mémorisation de marqueur comporte un registre de marqueur 13 à 15 comprenant plusieurs étages pour mémoriser des marqueurs d'erreur respectifs desdits mots de données et couplés avec ledit circuit d'horloge de décalage pour décaler des marqueurs d'erreurs successifs dans des étages successifs du registre de marqueur pendant lesdites périodes successives d'horloge de décalage.

6. Appareil selon la revendication 5, dans lequel ledit dispositif de détection comporte un dispositif (36) couplé avec les étages dudit registre de marqueur (13 à 15) pour détecter les conditions des marqueurs d'erreurs respectifs mémorisés dans ledit registre de marqueur (13 à 15), en détectant ainsi respectivement lesdites conditions (a), (b) et (c).

7. Appareil selon la revendication 6, dans lequel ledit dispositif d'application comporte un dispositif de sélection (22, 25) couplé avec des étages prédéterminés dudit registre de mots de données (16 à 19) pour appliquer les mots de données mémorisés dans des étages déterminés audit dispositif d'interpolation (20) en fonction des conditions détectées des marqueurs d'erreur mémorisés.

8. Appareil selon la revendication 7, dans lequel ledit dispositif de commande d'interpolation comporte un générateur d'impulsions qui produit une impulsion de moyenne et qui produit plusieurs impulsions de moyenne pendant une période d'horloge de décalage et un dispositif d'application d'impulsions de moyenne réagissant aux conditions détectées de marqueurs d'erreur mémorisés en appliquant sélectivement ladite une impulsion de moyenne ou lesdites plusieurs impulsions de moyenne audit dispositif d'interpolation (20).

9. Appareil selon la revendication 8, dans lequel ledit registre de mot de donnée (16 à 19) comporte 4 étages et ledit registre de marqueur (13 à 15) comporte trois étages pour mémoriser les marqueurs d'erreur du premier, du second et du troisième mots de données mémorisés respectivement dans le premier, le second et le troisième étages dudit registre de mots de données (16 à 19).

10. Appareil selon la revendication 9, dans lequel ledit dispositif de sélection comporte un premier sélecteur (22) couplé avec ledit premier et ledit second étages (16, 17) dudit registre de mots de données (16 à 19) pour appliquer sélectivement audit dispositif d'interpolation (20) le mot de donnée mémorisé dans ledit premier ou ledit second étages (16, 17) et un second sélecteur (25) couplé avec ledit troisième et ledit quatrième étages (18, 19) dudit registre de données (16 à 19) pour appliquer sélectivement audit dispositif d'interpolation (20) le mot de donnée mémorisé dans ledit troisième ou ledit quatrième étages (18, 19).

11. Appareil selon la revendication là, dans lequel ledit premier et ledit second sélecteurs (22, 25) dudit dispositif d'application d'impulsions de moyenne réagissent à la détection d'une condition d'erreur du marqueur d'erreur mémorisé dans le second étage (14) dudit registre de marqueur d'erreur (13 à 15) et à la détection d'une condition correcte du marqueur d'erreur mémorisé dans le troisième étage (15) dudit registre de marqueur d'erreur (13 à 15) en appliquant audit dispositif d'interpolation (20) les mots de données mémorisés dans le premier et le troisième étages (16, 18) dudit registre de mots de données (16 à 19) et en appliquant ladite une impulsion de moyenne audit dispositif d'interpolation (20) de manière qu'un mot interpolé dérivé de la moyenne des mots de données appliqués soit produit.

12. Appareil selon la revendication 10, dans lequel ledit dispositif de remplacement comporte un premier commutateur (21) pour appliquer sélectivement audit second étage (17) dudit registre de mots de données (16 à 19), le mot de donnée mémorisé dans ledit premier étage (16) ou le mot interpolé produit par ledit dispositif d'interpolation (20), ledit premier commutateur (21) réagissant à la détection de ladite condition (a) en appliquant ledit mot de données interpolé audit second étage (17) dudit registre de mots de données (16 à 19) pour le mémoriser avant le début de la période suivante d'horloge de décalage et pour permuter le marqueur d'erreur mémorisé dans le second étage (14) dudit registre de marqueur d'erreur (13 à 15) d'une condition d'erreur à une condition correcte; et ledit dispositif de remplacement comportant en outre un second commutateur (23) couplé avec le troisième étage (18) dudit registre de mots de données (16 à 19).

**Patentansprüche**

1. Anordnung zur selektiven Kompensation von Burstfehlern variabler Länge in aufeinanderfolgenden Datenwörtern, mit einem Eingang (12, 16 bis 19) für die Aufnahme der betreffenden aufeinanderfolgenden Datenwörter, mit einer Identifizierungseinrichtung (13 bis 15) zur Identifizierung, welche Datenwörter fehlerhaft und welche korrekt sind, mit einer Interpolationseinrichtung (20) für die Lieferung eines interpolierten Datenwortes durch Mittelung zweier zugeführter Datenwörter, mit einer Feststelleinrichtung (36), die die folgende Bedingung feststellt:

(a) das Vorhandensein eines fehlerhaften Datenwortes, welchem entsprechend korrekte Datenwörter vorangehen und nachfolgen, mit einer auf die Ermittelung der Bedingung (a) ansprechenden Abgabeeinrichtung (22, 25), die die betreffenden vorangehenden und folgenden korrekten Datenwörter an die genannte Interpolationseinrichtung (20) abgibt, mit einer mit der Interpolationseinrichtung (20) und der Feststelleinrichtung (36) verbundenen Interpolationssteuereinrichtung, die auf die Bedingung (a) hin die Interpolationseinrichtung (20) zum einmaligen Arbeiten steuert, und mit einer mit der Interpolationseinrichtung (20) und der Feststelleinrichtung (36) verbundenen Ersetzeinrichtung (21, 23), die auf die Bedingung (a) hin das fahlerhafte Datenwort durch das interpolierte Datenwort ersetzt und ein Datenwort aus einer Vielzahl von aufeinanderfolgenden fehlerhaften Datenwörtern durch ein vorangehendes Datenwort ersetzt, dadurch gekennzeichnet, daß die Feststelleinrichtung (36) ferner die folgenden Bedingungen ermittelt:

(b) das Vorhandensein einer ersten Vielzahl von aufeinanderfolgenden fehlerhaften Datenwörtern, denen korrekte Datenwörter vorangehen und nachfolgen, und

(c) das Vorhandensein einer zweiten Vielzahl von aufeinanderfolgenden fehlerhaften Datenwörtern, denen ein korrektes Datenwort vorangeht, wobei die genannte zweite Vielzahl von aufeinanderfolgenden fehlerhaften Datenwörtern gemäß der Bedingung (c) die genannte erste Vielzahl von aufeinanderfolgenden fehlerhaften Datenwörtern gemäß der Bedingung (b) übersteigt, daß die genannte Abgabeeinrichtung (22, 25) ferner auf die Ermittelung der Bedingung (b) hin an die Interpolationseinrichtung (20) die entsprechenden vorangehenden und nachfolgenden korrekten Datenwörter abgibt, daß die Interpolationssteuereinrichtung ferner auf die Bedingung (b) hin die Interpolationseinrichtung (20) derart steuert, daß diese mehrmals arbeitet, um eine Vielzahl von interpolierten Datenwörtern zu erzeugen, daß die Interpolationssteuereinrichtung eine Einrichtung aufweist, die auf die Bedingung (b) hin kurzzeitig ein pseudo-interpoliertes Datenwort speichert, welches von der Interpolationseinrichtung (20) auf die Mittelung der vorangehenden und nachfolgenden Datenwörter erzeugt worden ist, daß eine Einrichtung vorgesehen ist, welche das kurzzeitig gespeicherte pseudo-interpolierte Datenwort und eines der vorangehenden und nachfolgenden Datenwörter an die Interpolationseinrichtung (20) zur Mittelung zwecks Erzeugung eines ersten interpolierten Datenwortes abgibt, daß die Ersatzeinrichtung (21, 23) ferner auf die Bedingung (b) hin ein erstes fehlerhaftes Datenwort durch das interpolierte Datenwort ersetzt, und daß die Ersatzeinrichtung (21, 23) ferner auf die Bedingung (c) hin zumindest die erste und zweite Vielzahl von aufeinanderfolgenden fehlerhaften Datenwörtern durch das vorangehende korrekte Datenwort ersetzt.

2. Anordnung nach Anspruch 1, wobei die Interpolationssteuereinrichtung ferner eine Einrichtung aufweist, die das erste interpolierte Datenwort und das andere der vorangehenden und nachfolgenden Datenwörter an die Interpolationseinrichtung (20) zur Mittelung und Erzeugung eines zweiten interpolierten Datenwortes abgibt, und wobei die Ersatzeinrichtung (21, 23) eine Einrichtung aufweist, welche ein erstes von zwei aufeinanderfolgenden fehlerhaften Datenwörtern durch das erste interpolierte Datenwort ersetzt, und eine Einrichtung aufweist, die ein zweites der beiden aufeinanderfolgenden fehlerhaften Datenwörter durch das zweite interpolierte Datenwort ersetzt.

3. Anordnung nach Anspruch 1, wobei jedes der aufeinanderfolgenden Datenwörter von einem Fehlerkennzeichen begleitet ist und wobei die Identifizierungseinrichtung (13 bis 15) eine Kennzeichenspeichereinrichtung (13 bis 15) aufweist, welche die Fehlerkennzeichen der empfangenen aufeinanderfolgenden Datenwörter speichert.

4. Anordnung nach Anspruch 3, wobei der Eingang (12, 16 bis 19) eine Datenwortregistereinrichtung (16 bis 19) mit einer Vielzahl von Stufen für die Speicherung von entsprechenden Datenwörtern aufweist und wobei mit der Datenwortregistereinrichtung (16 bis 19) eine Schiebetakteinrichtung gekoppelt ist, die eine Vielzahl von Datenwörtern in aufeinanderfolgenden Schiebetaktperiodienen aufeinanderfolgende Stufen verschiebt.

5. Anordnung nach Anspruch 4, wobei die Kennzeichenspeichereinrichtung eine Kennzeichenregistereinrichtung (13 bis 15) mit einer Vielzahl von Stufen aufweist, die entsprechende Fehlerkennzeichen der Datenwörter speichern und die mit der Schiebetakteinrichtung derart gekoppelt sind, daß aufeinanderfolgende Fehlerkennzeichen in aufeinanderfolgende Kennzeichenregisterstufen innerhalb der aufeinanderfolgenden Schiebetaktperioden geschoben werden.

6. Anordnung nach Anspruch 5, wobei die Feststelleinrichtung eine Einrichtung (36) aufweist, die mit den Stufen des Kennzeichenregisters (13 bis 15) derart gekoppelt ist, daß die Zustände der in dem Kennzeichenregister (13 bis 15) gespeicherten Fehlerkennzeichen ermittelt und dadurch die Bedingungen (a), (b) bzw. (c) ermittelt werden.

7. Anordnung nach Anspruch 6, wobei die Abgabeeinrichtung ein Auswahleinrichtung (22, 25) aufweist, die mit ausgewählten Stufen der Datenwortregistereinrichtung (16 bis 19) verbunden ist und die in ausgewählten Stufen gespeicherte Datenwörter an die Interpolationseinrichtung (20) als Funktion der ermittelten Bedingungen bzw. Zustände der gespeicherten Fehlerkennzeichen abgibt.

8. Anordnung nach Anspruch 7, wobei die Interpolationssteuereinrichtung eine Impulserzeugungseinrichtung für die Erzeugung eines Mittelungsimpulses und für die Erzeugung einer Vielzahl von Mittelungsimpulsen während einer Schiebetaktperiode sowie eine Mittelungsimpuls-Abgabeeinrichtung aufweist, die auf die ermittelten Bedingungen bzw. Zustände der gespeicherten Fehlerkennzeichen hin den betreffenden einen Mittelungsimpuls oder die betreffende Vielzahl von Mittelungsimpulsen an die Interpolationseinrichtung (20) selektiv abgibt.

9. Anordnung nach Anspruch 8, wobei die Datenwortregistereinrichtung (16 bis 19) vier Stufen aufweist und wobei das Kennzeichenregister (13 bis 15) drei Stufen für die Speicherung der Fehlerkennzeichen der ersten, zweiten bzw. dritten Datenwörter aufweist, die in den ersten, zweiten bzw. dritten Stufen der Datenwortregistereinrichtung (16 bis 19) gespeichert sind.

10. Anordnung nach Anspruch 9, wobei die Auswahleinrichtung einen ersten Wähler (22), die mit den ersten und zweiten Stufen (16, 17) der Datenwortregistereinrichtung (16 bis 19) zur selektiven Abgabe des in der ersten oder zweiten Stufe (16, 17) gespeicherten Datenwortes an die Interpolationseinrichtung (20) verbunden ist, und einen zweiten Wähler (25) aufweist, der mit den dritten und vierten Stufen (18, 19) der Datenregistereinrichtung (16 bis 19) derart verbunden ist, daß an die Interpolationseinrichtung (20) selektiv das in der dritten oder vierten Stufe (18, 19) gespeicherte Datenwort abgegeben wird.

11. Anordnung nach Anspruch 10, wobei die ersten und zweiten Wähler (22, 25) und die Mittelungsimpulsabgabeeinrichtung auf die Ermittelung eines Fehlerzustands des in der zweiten Stufe (14) des Fehlerkennzeichenregisters (13 bis 15) gespeicherten Fehlerkennzeichens und auf die Ermittelung eines korrekten Zustands des in der dritten Stufe (15) des Fehlerkennzeichenregisters (13 bis 15) gespeicherten Fehlerkennzeichens hin an die Interpolationseinrichtung (20) die in den ersten und dritten Stufen (16, 18) der Datenwortregistereinrichtung (16 bis 19) gespeicherten Datenwörter abgibt und den genannten einen Mittelungsimpuls an die Interpolationseinrichtung (20) liefert, derart, daß ein aus der Mittelung der abgegebenen Datenwörter abgeleitetes interpoliertes Wort abgegeben wird.

12. Anordung nach Anspruch 10, wobei die Ersatzeinrichtung einen ersten Schalter (21) aufweist, über den an die zweite Stufe (17) der Datenwortregistereinrichtung (16 bis 19) entweder das in der ersten Stufe (16) gespeicherte Datenwort oder das von der Interpolationseinrichtung (20) erzeugte interpolierte Wort selektiv abgegeben wird und der auf die Ermittelung der Bedingung (a) hin anspricht, um das interpolierte Datenwort an die zweite Stufe (17) der Datenwortregistereinrichtung (16 bis 19) zur Speicherung vor Beginn der nächsten Schiebetaktperiode abzugeben und um das in der zweite Stufe (14) des Fehlerkennzeichenregisters (13 bis 15) gespeicherte Fehlerkennzeichen von einem Fehlerzustand in einen korrekten Zustand zu ändern und wobei die Ersatzeinrichtung ferner einen zweiten Schalter (25) aufweist, der mit der dritten Stufe (18) der Datenwortregistereinrichtung (16 bis 19) verbunden ist.

0 081 387

**F I G . 1 A**

| $D_0$ | $D_1$ | $D_2$ | ---------- | $D_{3n}$ | $D_{3n+1}$ | $D_{3n+2}$ |
|---|---|---|---|---|---|---|

1 WORD

1 BLOCK

**F I G . 1 B**

(I)

| $D_0$ | $D_3$ | ---------- | $D_{3(k-1)}$ | $D_{3k}$ | ---------- | $D_{3(n-1)}$ | $D_{3n}$ |
|---|---|---|---|---|---|---|---|

(II)

| $D_1$ | $D_4$ | ---------- | $D_{3(k-1)+1}$ | $D_{3k+1}$ | ---------- | $D_{3(n-1)+1}$ | $D_{3n+1}$ |
|---|---|---|---|---|---|---|---|

(III)

| $D_2$ | $D_5$ | ---------- | $D_{3(k-1)+2}$ | $D_{3k+2}$ | ---------- | $D_{3(n-1)+2}$ | $D_{3n+2}$ |
|---|---|---|---|---|---|---|---|

**F I G . 1 C**

| --- | $D_0$ | ---------- | $D_{3n}$ | $D_1$ | ---------- | $D_{3n+1}$ | $D_2$ | ---------- | $D_{3n+2}$ | --- |
|---|---|---|---|---|---|---|---|---|---|---|

SUB-BLOCK     SUB-BLOCK     SUB-BLOCK

1 BLOCK

0 081 387

F I G.2A

$D_{3k}$

--- o  o  ×  o  o  ×  o  o  × ---

$D_{3(k-1)+2}$  $D_{3k+1}$

F I G.2B

$D_{3k}$  $D_{3k+2}$

--- ×  o  ×  ×  o  ×  ×  o  × ---

$D_{3(k-1)+2}$  $D_{3k+1}$

F I G.3

1

| RAM | → | ERROR CORRECTION CKT | → | MAGNETIC RECORDING APPARATUS | → | ERROR DETECTOR | → | RAM |

2    3    4    7    8

ADDRESS GEN.

5

RAM   ERROR COMPENSATOR

6    9    10

# FIG.4A

# FIG.4B

# FIG.5

| EF1 | 0 | 1 | 0 | 1 | 0 | 1 |
|-----|---|---|---|---|---|---|
| EF2 | 0 | 0 | 1 | 1 | 1 | 1 |
| EF3 | 0 | 0 | 0 | 0 | 1 | 1 |
| | NO COMPENSATION | NO COMPENSATION | ONCE AVERAGING | NO COMPENSATION | THREE AVERAGING | PREVIOUS VALUE HOLD |

FIG.6A

FIG.6B { EF1 EF2 EF3 }

FIG.6C

FIG.6D

FIG.6E

FIG.6F

FIG.6G

FIG.6H

FIG.6I

T1 T2 T3 T4 T5 T6 T7 T8 T9 T10

t1 t2 t3 t4 t5 t6 t7 t8 t9 t10 t11

0 081 387

F I G.7

# F I G.8

| EF$_1$ | 0 | 1 | 0 | 1 | 0 | 1 | 0 | 1 |
|---|---|---|---|---|---|---|---|---|
| EF$_2$ | 0 | 0 | 1 | 1 | 0 | 0 | 1 | 1 |
| EF$_3$ | 0 | 0 | 0 | 0 | 1 | 1 | 1 | 1 |
| | NO COMPENSATION | NO COMPENSATION | NO COMPENSATION | NO COMPENSATION | ONCE AVERAGING | ONCE AVERAGING | THREE AVERAGING | PREVIOUS VALUE HOLD |

FIG.9A

FIG.9B  [ EF1  EF2  EF3 ]

FIG.9C
FIG.9D
FIG.9E

T1  T2  T3  T4  T5  T6  T7  T8  T9  T10

t1  t2  t3  t4  t5  t6  t7  t8  t9  t10  t11

0 081 387